(19) Europäisches Patentamt
European Patent Office
Office européen des brevets

(11) **EP 4 691 773 A1**

(12) **EUROPEAN PATENT APPLICATION**
published in accordance with Art. 153(4) EPC

(43) Date of publication:
**11.02.2026 Bulletin 2026/07**

(21) Application number: **24779514.9**

(22) Date of filing: **14.03.2024**

(51) International Patent Classification (IPC):
***B32B 27/36** (2006.01)* ***B05D 3/06** (2006.01)*
***B05D 7/04** (2006.01)* ***B05D 7/24** (2006.01)*
***B29C 45/14** (2006.01)* ***B32B 27/30** (2006.01)*

(52) Cooperative Patent Classification (CPC):
**B05D 3/06; B05D 7/04; B05D 7/24; B29C 45/14; B32B 27/30; B32B 27/36**

(86) International application number:
**PCT/JP2024/009971**

(87) International publication number:
**WO 2024/203385 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023056916**

(71) Applicant: **TEIJIN LIMITED**
**Kita-ku,**
**Osaka-shi,**
**Osaka 530-0005 (JP)**

(72) Inventors:
- **Ekinaka, Tatsuya**
  **Osaka-shi, Osaka 530-0005 (JP)**
- **Akaoka, Tomoaki**
  **Osaka-shi, Osaka 530-0005 (JP)**
- **Okada, Youhei**
  **Osaka-shi, Osaka 530-0005 (JP)**
- **Kaizawa, Noya**
  **Osaka-shi, Osaka 530-0005 (JP)**

(74) Representative: **Kraus & Lederer PartGmbB**
**Thomas-Wimmer-Ring 15**
**80539 München (DE)**

# (54) LAMINATED FILM, METHOD FOR PRODUCING SAME, AND RESIN-MOLDED ARTICLE

(57) A specific laminated film has a layer containing a polycarbonate resin (layer A), a layer containing a thermoplastic acrylic resin (layer B), an acrylic resin mixture intermediate layer (layer C), and a layer containing a cured product of an active energy ray-curable acrylate (layer D), in which the layers are laminated in this order, and the laminated film has a feature that the film has such excellent wear resistance, adhesion between layers, and flexing properties that it is advantageously used in in-mold lamination molding.

EP 4 691 773 A1

## Description

Technical Field

The present invention relates to a laminated film, a method for producing the same, and a resin-molded article. More specifically, the invention is concerned with a laminated film having a layer containing a polycarbonate resin and a layer containing a thermoplastic acrylic resin, a method for producing the same, and a resin-molded article.

Background Art

A great number of decorated resin-molded articles have been used in automobiles, electrical appliances, articles for daily use, and the like. As a method for decorating a resin-molded article, there has been proposed a molding-simultaneous decorating method (referred to also as "in-mold decoration" or "in-mold lamination") in which a resin film having patterns or various functions imparted thereto is disposed in a mold, and injection molding is conducted and, simultaneously with injection molding, the resin film and the injected resin are unified to obtain a resin-molded article. Differing from coating, printing, deposition, and the like used in the conventional surface decoration, the proposed decorating method has features, for example, that the method can cope with complicated shapes by mold design, that molding and decoration can be simultaneously performed, and that the method has such high degree of freedom that various designs or functions can be imparted to the resin film.

For example, PTL 1 has a description of a method in which a decorative sheet is disposed in a mold having a cavity, and a molten resin is injected into the mold through a gate of the mold, obtaining a resin-molded article having the surface decorated.

As a method for imparting a function to a resin film, there has been known, for example, a method in which a coat agent capable of imparting various functions is applied to a substrate film. With respect to the type of the coat agent, a resin composition containing an active energy ray-curable multifunctional (meth)acrylate, and the like are frequently used from the viewpoint of the productivity and the like. In the invention, the term "(meth)acrylate" is used as one which collectively refers to an acrylate and a methacrylate.

In the decorative film proposed as the resin film, it has been known that a polycarbonate resin is used as a substrate film.

For example, PTL 2 discloses a decorative sheet obtained by subjecting to decoration one surface of a laminated film having a layer containing a methacrylic resin and acrylic rubber particles laminated on the surface of a polycarbonate resin layer, and laminating a thermoplastic resin sheet on the decorated surface.

Resin molded articles having various functions imparted by the above-mentioned methods have been used in various applications, for example, interior trim parts.

However, when the resin molded article is used in the outdoor application, for example, in exterior automotive trims, the initial performance of the molded article is excellent; however, the molded article does not have a satisfactory weathering resistance, and cannot maintain the required performance during an expected period of service.

Citation List

Patent Literature

PTL 1: JP2010-247493A
PTL 2: JP2009-234184A

Summary of Invention

Technical Problem

As mentioned above, an acrylic resin sheet is widely used as a decorative sheet comprising a resin film having a function imparted thereto. However, the acrylic resin sheet has a disadvantage in that when used as a surface layer, the acrylic resin sheet exhibits low heat resistance and wear resistance such that application of the sheet to the outdoor use is difficult. In addition, there has been desired a laminated film having not only the above-mentioned properties but also excellent moldability, such as adhesion between the layers in a resin film or sheet, and flexing properties applicable to in-mold lamination molding.

An object of the invention is to provide a novel laminated film.

Another object of the invention is to provide a laminated film which has such excellent wear resistance, adhesion between layers, and flexing properties that the film is advantageously used for in-mold lamination molding.

Still another object of the invention is to provide a novel method for producing the laminated film.

Still further another object of the invention is to provide a resin-molded article having a thermoplastic resin injection-molded on the surface on the base layer side of the above-mentioned laminated film.

The present inventors have made studies on a decorative laminated film having, on the surface of a polycarbonate resin as a base layer, a thermoplastic acrylic resin layer, and a layer containing a cured product of an active energy ray-curable acrylate on the acrylic resin layer. In the process, it has been found that, when an intermediate layer containing a specific acrylic resin is present between the thermoplastic acrylic resin layer and the cured product of the active energy ray-curable acrylate, the laminated film can solve the above-mentioned problems, and has such excellent weathering resistance that the film can be particularly used in the outdoor application, and the invention has been completed.

Solution to Problem

The means for solving the problems includes the following embodiments.

[1] A laminated film having a layer containing a polycarbonate resin (layer A), a layer containing a thermoplastic acrylic resin (layer B), an acrylic resin mixture intermediate layer (layer C), and a layer containing a cured product of an active energy ray-curable acrylate (layer D), in which the layers are laminated in this order, and satisfying the following properties (a) to (d):

(a) the active energy ray-curable acrylate contains at least one of a multifunctional (meth)acrylate and an urethane (meth)acrylate;
(b) the layer D contains at least one of inorganic fine particles and a silicon compound hydrolyzation condensation product;
(c) based on the total mass of the multifunctional (meth)acrylate, the urethane (meth)acrylate, the inorganic fine particles, and the silicon compound hydrolyzation condensation product, the total content of the multifunctional (meth)acrylate and the urethane acrylate is 45 to 97% by mass, and the total content of the inorganic fine particles and the silicon compound hydrolyzation condensation product is 3 to 55% by mass; and
(d) the layer C contains the thermoplastic acrylic resin and a cured product of at least one of the multifunctional (meth)acrylate and the urethane (meth)acrylate.

[2] The laminated film according to item [1] above, in which $Y/(X + Y)$ is 0.2 to 0.9, when the amount of the thermoplastic acrylic resin in the layer C is X (parts by mass), and the total amount of the multifunctional (meth)acrylate and the urethane (meth)acrylate in the layer C is Y (parts by mass).
[3] The laminated film according to item [1] or [2] above, in which the reaction ratio of the double bond of the (meth) acrylic group of the multifunctional (meth)acrylate and the urethane (meth)acrylate in the layer C is 25 to 70%.
[4] The laminated film according to any one of items [1] to [3] above, in which the ratio of the thickness of the layer C to the total of the thickness of the layer C and the thickness of the layer D is 10 to 70%.
[5] The laminated film according to any one of items [1] to [4] above, in which the layer C has a thickness of 0.3 to 5.0 μm.
[6] The laminated film according to any one of items [1] to [5] above, in which the layer D has a thickness of 1.5 to 18 μm.
[7] The laminated film according to any one of items [1] to [6] above, in which the total of the thickness of the layer C and the thickness of the layer D is 3 to 20 μm.
[8] The laminated film according to any one of items [1] to [7] above, in which the layer A contains a polyester thermoplastic elastomer, the polyester thermoplastic elastomer is composed of a hard segment containing a polybutylene terephthalate unit, and a soft segment containing a polyester unit which has an aromatic dicarboxylic acid and an aliphatic dicarboxylic acid as a dicarboxylic acid component, and a diol having 5 to 15 carbon atoms as a diol component.
[9] The laminated film according to item [8] above, in which the polyester thermoplastic elastomer is contained in an amount of 1 to 20 parts by weight, relative to 100 parts by weight of the polycarbonate resin.
[10] A method for producing the laminated film according to item [1] above, including laminating a layer containing a polycarbonate resin (layer A) and a layer containing a thermoplastic acrylic resin (layer B) by coextrusion, and then applying onto the layer B a coating composition containing an organic solvent, an active energy ray-curable acrylate, and at least one of inorganic fine particles and a silicon compound hydrolyzation condensation product, and drying the applied coating composition, and then irradiating the resultant composition with an active energy ray to form an acrylic resin mixture intermediate layer (layer C) and an acrylate cured layer (layer D).

[11] The method for producing the laminated film according to item [10] above, in which the layer C contains the thermoplastic acrylic resin and a cured product of at least one of the multifunctional (meth)acrylate and the urethane (meth)acrylate.

[12] A resin-molded article having a thermoplastic resin layer in contact with the layer A of the laminated film according to any one of items [1] to [9] above.

[13] A resin-molded article having a thermoplastic resin injection-molded on the surface on the layer A side of the laminated film according to any one of items [1] to [9] above.

Advantageous Effects of Invention

In the invention, there can be provided a laminated film having not only excellent adhesion between layers, impact resistance, flexing properties, and wear resistance but also a weathering resistance. The laminated film is useful as a thermoforming film for in-mold lamination molding and the like or a decorative film. A resin-molded article using the laminated film can be used in, for example, an interior automotive trim material, an electrical appliance, a cosmetic film, an interior for building material, and an exterior for building material, and the resin-molded article has especially excellent weathering resistance and therefore is of extremely great commercial significance when used in an exterior automotive trim material or exterior for building construction. Description of Embodiments

Hereinbelow, the contents of the present disclosure will be described in detail. The following description of the requirements of the disclosure is frequently made with reference to a representative embodiment of the present disclosure, but such an embodiment should not be construed as limiting the scope of the present disclosure.

In the present specification, the range of values indicated using the preposition "to" means a range of values including the respective values shown before and after "to" as the lower limit value and the upper limit value.

Further, with respect to the expression of a group (atomic group) in the present specification, an expression that does not indicate whether a group is substituted or unsubstituted includes both a group having no substituent and a group having a substituent. For example, the term "alkyl group" includes both an alkyl group having no substituent (unsubstituted alkyl group) and an alkyl group having a substituent (substituted alkyl group).

In the present specification, the term "(meth)acrylic" is used with an intension of including both acrylic and methacrylic, and the term "(meth)acryloyl" is used with an intension of including both acryloyl and methacryloyl.

Further, in the present specification, the term "step" means not only an independent step but also a step which cannot be clearly distinguished from another step as long as the intended object of the step can be achieved.

In the present disclosure, the term "% by mass" and the term "% by weight" have the same meaning, and the term "part(s) by mass" and the term "part(s) by weight" have the same meaning.

In the present disclosure, with respect to the component contained in a composition or the constitutional unit in a polymer, a single component or unit may be individually used, or two or more components or units may be used in combination unless otherwise specified.

Further, in the present disclosure, with respect to the amount of the constitutional unit in a polymer, when a plurality of materials corresponding to the constitutional units in the polymer or a plurality of constitutional units are present, the amount of the constitutional units means the total amount of the constitutional units present in the polymer unless otherwise specified.

Further, in the present disclosure, a combination of two or more preferred embodiments is a more preferred embodiment.

In the laminated film of the invention, a layer containing a polycarbonate resin (layer A) as a base layer, a layer containing a thermoplastic acrylic resin (layer B), an acrylic resin mixture intermediate layer (layer C), and a layer containing a cured product of an active energy ray-curable acrylate (layer D) are laminated in the order from the base layer side. Further, the laminated film satisfies the following properties (a) to (d):

(a) the active energy ray-curable acrylate contains at least one of a multifunctional (meth)acrylate and an urethane (meth)acrylate;

(b) the layer D contains at least one of inorganic fine particles and a silicon compound hydrolyzation condensation product;

(c) based on the total mass of the multifunctional (meth)acrylate, the urethane (meth)acrylate, the inorganic fine particles, and the silicon compound hydrolyzation condensation product, the total content of the multifunctional (meth) acrylate and the urethane acrylate is 45 to 97% by mass, and the total content of the inorganic fine particles and the silicon compound hydrolyzation condensation product is 3 to 55% by mass; and

(d) the layer C contains the thermoplastic acrylic resin and a cured product of at least one of the multifunctional (meth) acrylate and the urethane (meth)acrylate.

The layers are individually described below.

-Layer A-

(Layer containing a polycarbonate resin (layer A))

The polycarbonate resin used in the layer A in the invention is a polymer having a dihydroxy compound bonded through a carbonate linkage, and is generally obtained by subjecting a dihydroxy component and a carbonate precursor to reaction by an interfacial polymerization method or a melt polymerization method.

Representative examples of dihydroxy components include 2,2-bis(4-hydroxyphenyl)propane (generally called bisphenol A), 2,2-bis{(4-hydroxy-3-methyl)phenyl}propane (bisphenol C), 2,2-bis(4-hydroxyphenyl)butane, 2,2-bis(4-hydroxyphenyl)-3-methylbutane, 2,2-bis(4-hydroxyphenyl)-3,3-dimethylbutane, 2,2-bis(4-hydroxyphenyl)-4-methylpentane, 1,1-bis(4-hydroxyphenyl)cyclohexane, 1,1-bis(4-hydroxyphenyl)-3,3,5-trimethylcyclohexane, 1,1-bis(4-hydroxyphenyl)octane, 1,1-bis(4-hydroxyphenyl)decane, 9,9-bis{(4-hydroxy-3-methyl)phenyl}fluorene, 9,9-bis(4-hydroxyphenyl)fluorene, $\alpha,\alpha'$-bis(4-hydroxyphenyl)-m-diisopropylbenzene, isosorbide, 1,3-propanediol, 1,4-butanediol, and 1,6-hexanediol. The polycarbonate may be either a homopolymer using one of the dihydroxy components, or a copolymer obtained by copolymerizing two or more of the dihydroxy components. In view of the physical properties and cost, bisphenol A is preferred. In the invention, preferred is a polycarbonate in which 50 mol% or more, more preferably 70 mol% or more, further preferably 90 mol% or more of the bisphenol component is bisphenol A and/or bisphenol C.

Specific examples of polycarbonates include a homopolymer of bisphenol A, a homopolymer of bisphenol C, a binary copolymer of bisphenol A and bisphenol C, a binary copolymer of bisphenol A and 1,1-bis(4-hydroxyphenyl)-3,3,5-trimethylcyclohexane, and a binary copolymer of bisphenol A and 9,9-bis{(4-hydroxy-3-methyl)phenyl}fluorene. A homopolymer of bisphenol A is most preferred.

As a carbonate precursor, a carbonyl halide, a carbonate, a haloformate, or the like is used, and specific examples of carbonate precursors include phosgene, diphenyl carbonate, or a dihydric phenol dihaloformate.

In the production of a polycarbonate resin by subjecting the dihydric dihydroxy compound and carbonate precursor to reaction by an interfacial polymerization method or a melt polymerization method, if necessary, a catalyst, a chain terminator, a dihydric phenol antioxidant, and the like may be used. The polycarbonate resin may be a branched polycarbonate resin obtained by copolymerizing a multifunctional aromatic compound which is trifunctional or more, or may be a polyester carbonate resin obtained by copolymerizing an aromatic or aliphatic bifunctional carboxylic acid, or may be a mixture of two or more types of the obtained polycarbonate resins.

The polycarbonate resin preferably has a molecular weight in the range of from 13,000 to 40,000, in terms of a viscosity average molecular weight. When the molecular weight of the polycarbonate resin is smaller than 13,000, a sheet formed from the polycarbonate resin is likely to be brittle, so that a crack or flash is caused during thermoforming, and, when the molecular weight of the polycarbonate resin is larger than 40,000, it is likely that the polycarbonate resin in the form of a resin composition with a polyester thermoplastic elastomer has too high a melt viscosity, making it difficult to form a film from the melted resin composition. The molecular weight of the polycarbonate resin is more preferably 15,000 to 35,000, further preferably 20,000 to 32,000, especially preferably 22,000 to 28,000. When the polycarbonate resin is in the form of a mixture of two or more polycarbonate resins, the molecular weight of the polycarbonate resin indicates a molecular weight of whole of the mixture. Here, the viscosity average molecular weight is a value determined by measuring a specific viscosity ($\eta_{sp}$) at 20°C for a solution obtained by dissolving 0.7 g of polycarbonate in 100 mL of methylene chloride, and calculating a viscosity average molecular weight (M) by the following formula.

$$\eta_{sp}/c = [\eta] + 0.45 \times [\eta]^2 c$$

$$[\eta] = 1.23 \times 10^{-4} M^{0.83}$$

(provided that c = 0.7 g/dL, and [η] is a limiting viscosity.)

The glass transition temperature of the layer containing a polycarbonate resin (layer A) in the invention needs to be in the range of from 100 to 145°C, preferably 110 to 140°C, more preferably 120 to 130°C. When the glass transition temperature of the layer A is higher than the above range, it is necessary to increase the thermoforming temperature, and the heat applied for thermoforming initiates a thermal decomposition reaction of the acrylic resin component contained in the layer B, layer C, and layer D or a thermal reaction of a double bond of the unreacted acrylate monomer contained in the layer C and layer D, causing the molded product to have poor appearance, such as whitening, unevenness of the surface, or a crack. Further, when the glass transition temperature of the layer A is lower than the above range, the molding temperature appropriate to thermoforming of the layer A does not reach the glass transition temperature of the layer containing a thermoplastic acrylic resin (layer B), making the thermoforming impossible. Here, the glass transition temperature indicates a value as measured by a differential scanning calorimetry (DSC) method.

The layer A preferably contains the polycarbonate resin in an amount of 50% by mass or more, more preferably

80% by mass or more, and may contain the polycarbonate resin in an amount of 100%, but, from the viewpoint of the glass transition temperature and transparency of the layer A, a polyester thermoplastic elastomer may be blended with the polycarbonate resin. The polyester thermoplastic elastomer is preferably a multiblock copolymer composed of a hard segment containing a polybutylene terephthalate unit, and a soft segment containing a polyester unit which has an aromatic dicarboxylic acid and an aliphatic dicarboxylic acid as a dicarboxylic acid component and a diol having 5 to 15 carbon atoms as a diol component.

The hard segment containing a polybutylene terephthalate unit has excellent compatibility with a polycarbonate resin and is preferred from the viewpoint of the transparency and thermoformability, and further has excellent properties in view of strength and the like. The polybutylene terephthalate may contain another component as a copolymerizable component as long as the effects of the invention are not sacrificed. The amount of the contained copolymerizable component in each of the dicarboxylic acid component and the diol component is preferably 30 mol% or less, more preferably 20 mol% or less, further preferably 10 mol% or less, based on the total mole (100 mol%) of all the copolymerizable components in each of the dicarboxylic acid component and the diol component. The polymer forming the hard segment preferably has an intrinsic viscosity in the range of 0.2 to 2.0, more preferably 0.5 to 1.5.

The soft segment containing a polyester unit which has an aromatic dicarboxylic acid and an aliphatic dicarboxylic acid as a dicarboxylic acid component, and a diol having 5 to 15 carbon atoms as a diol component indicates a segment such that a polymer formed from the segment has a melting temperature of 100°C or lower, or is in a liquid state at 100°C and exhibits non-crystalline properties. The polymer forming the soft segment preferably has an intrinsic viscosity in the range of 0.2 to 2.0, more preferably 0.5 to 1.5. The soft segment used is a soft segment containing a polyester unit which has an aromatic dicarboxylic acid and/or an aliphatic carboxylic acid as a dicarboxylic acid component, and a diol having 5 to 15 carbon atoms as a diol component (hereinafter, frequently referred to as "SS-1"). SS-1 is preferred in view of obtaining extremely excellent transparency.

In the soft segment SS-1, from the viewpoint of obtaining more excellent transparency, it is preferred that the amount of the aromatic dicarboxylic acid contained is 60 to 99 mol% and the amount of the aliphatic dicarboxylic acid contained is 1 to 40 mol%, based on the total mole of the dicarboxylic acid components (100 mol%). It is more preferred that the amount of the aromatic dicarboxylic acid contained is 70 to 95 mol% and the amount of the aliphatic dicarboxylic acid contained is 5 to 30 mol%. It is further preferred that the amount of the aromatic dicarboxylic acid contained is 85 to 93 mol% and the amount of the aliphatic dicarboxylic acid contained is 7 to 15 mol%. It is especially preferred that the amount of the aromatic dicarboxylic acid contained is 89 to 92 mol% and the amount of the aliphatic dicarboxylic acid contained is 8 to 11 mol%.

As the aromatic dicarboxylic acid of SS-1, preferred is at least one member selected from the group consisting of terephthalic acid, isophthalic acid, 1,5-naphthalenedicarboxylic acid, 2,6-naphthalenedicarboxylic acid, 4,4'-diphenylcarboxylic acid, bis(4-carboxyphenyl)methane, and bis(4-carboxyphenyl) sulfone, and terephthalic acid or isophthalic acid is more preferred, and isophthalic acid is preferred particularly in view of lowering of crystalline properties.

As the aliphatic dicarboxylic acid of SS-1, a linear aliphatic dicarboxylic acid having 4 to 12 carbon atoms, such as succinic acid, adipic acid, or sebacic acid, is preferred, and sebacic acid is especially preferred.

As the diol component having 5 to 15 carbon atoms of SS-1, a linear aliphatic diol having 6 to 12 carbon atoms, such as hexamethylene glycol, decamethylene glycol, 3-methylpentanediol, or 2-methyloctamethylenediol, is more preferred, and hexamethylene glycol is especially preferred.

SS-1 is especially preferred from the viewpoint of having high compatibility with a polycarbonate resin to achieve a layer having high transparency, and obtaining a thermoformed product having excellent surface properties and transparency. More specifically, SS-1 is preferably a polyester containing isophthalic acid, sebacic acid, and hexamethylene glycol.

In the invention, with respect to the ratio of the hard segment and the soft segment in the polyester thermoplastic elastomer, it is preferred that the amount of the hard segment is 20 to 70% by weight and the amount of the soft segment is 80 to 30% by weight, based on the weight of the elastomer (100% by weight), and it is more preferred that the amount of the hard segment is 20 to 40% by weight and the amount of the soft segment is 80 to 60% by weight. The polyester thermoplastic elastomer preferably has an intrinsic viscosity (a value as measured in o-chlorophenol at 35°C) of 0.6 or more, more preferably in the range of 0.8 to 1.5, further preferably in the range of 0.8 to 1.2. When the intrinsic viscosity of the polyester thermoplastic elastomer is lower than the above range, there is a disadvantage in that the sheet strength is likely to be lowered, which is not preferable.

In the invention, when the layer A contains the polyester thermoplastic elastomer, it is preferred that the polyester thermoplastic elastomer is contained in an amount of 1 to 20 parts by weight, relative to 100 parts by weight of the polycarbonate resin in the layer A. When the amount of the polyester thermoplastic elastomer is smaller than 1 part by weight, it is likely that the effect of improving the flowability of the film being thermoformed is poor, and, when the amount of the polyester thermoplastic elastomer is larger than 20 parts by weight, it is likely that the layer A has unsatisfactory rigidity.

The layer A preferably has a thickness in the range of 25 to 500 μm, more preferably in the range of 30 to 450 μm, further preferably in the range of 40 to 400 μm, most preferably in the range of 50 to 350 μm.

The layer A in the invention can contain various types of additives generally used in resins. Examples of additives include a heat stabilizer, an antioxidant, an ultraviolet light absorber, an antistatic agent, and a dye. Further, the layer A can contain a reinforcing filler, such as a glass fiber, as long as the effects of the present invention are not sacrificed.

The thickness of the base layer containing a polycarbonate resin (layer A) is determined by measuring a thickness of the laminated film of the present disclosure using a micrometer, and subtracting the total of the thickness of the layer B, layer C, and layer D measured by means of a scanning electron microscope (SEM) from the measured thickness of the laminated film.

The thickness of each of the layer B, layer C, and layer D can be determined by measuring a cross-section of the laminated film of the present disclosure by means of a scanning electron microscope (SEM).

-Layer B-

(Layer containing a thermoplastic acrylic resin (layer B))

The thermoplastic acrylic resin used in the layer B in the invention is preferably containing a polymer of a methacrylate or acrylate mainly. When a resin other than the thermoplastic acrylic resin, for example, a polycarbonate resin is used in the layer B, a disadvantage is caused in that the laminated film has such low surface hardness that the resultant molded article easily suffers formation of a flaw, which is not preferable. Further, when a PET resin is used in the layer B, the resultant laminated film is likely to have poor appearance due to the uneven thickness, which is not preferable. As the thermoplastic acrylic resin, preferred is a copolymer containing methyl methacrylate in an amount of preferably 50 mol% or more, more preferably 70 mol% or more, further preferably 80 mol% or more, especially preferably 90 mol% or more.

Examples of copolymerizable components other than methyl methacrylate include ethyl methacrylate, butyl methacrylate, 2-ethylhexyl methacrylate, methyl acrylate, ethyl acrylate, butyl acrylate, and 2-ethylhexyl acrylate. Further examples of other copolymerizable components include other ethylenically unsaturated monomers. Specific examples of such monomers include vinyl aromatic compounds, such as styrene, α-methylstyrene, and vinyltoluene, diene compounds, such as 1,3-butadiene and isoprene, alkenylcyan compounds, such as acrylonitrile and methacrylonitrile, acrylic acid, methacrylic acid, maleic anhydride, and N-substituted maleimide. These compounds may be used individually or in combination of two or more kinds thereof. The amount of the copolymerizable component contained is preferably 0 to 50% by weight, more preferably 0 to 30% by weight, further preferably 0 to 20% by weight. The method for producing a thermoplastic acrylic resin is generally roughly classified into an emulsion polymerization method, a suspension polymerization method, and a continuous polymerization method, and the thermoplastic acrylic resin used in the invention may be produced by any of the polymerization methods. Further, to the layer B may be added various additives, such as a general heat stabilizer, coloring agent, release agent, lubricant, antistatic agent, or matting agent.

Rubber particles can be added to the layer B in the invention, but it is preferred that the layer B substantially does not contain rubber particles. Addition of rubber particles to a thermoplastic acrylic resin in an attempt to improve the toughness and the like is a known technique that has been widely used, but, from the viewpoint of securing the transparency and surface hardness, it is preferred that the thermoplastic acrylic resin does not contain rubber particles.

The layer B preferably has a thickness in the range of 10 to 200 μm, further preferably in the range of 20 to 150 μm, most preferably in the range of 30 to 100 μm. When the thickness of the layer B is designed to be in the above range, more stable film formation can be made, and further, when adding an additive to the layer B, various performances, such as weathering resistance, can be achieved. Furthermore, an appropriate flex-resistant laminated film having appropriate flexing properties and various excellent performances, such as weathering resistance, can be achieved.

-Layer C-

(Acrylic resin mixture intermediate layer (layer C))

The layer C is an intermediate layer having acrylic resins mixed, which contains the thermoplastic acrylic resin constituting the layer B and the cured product of an active energy ray-curable acrylate constituting the below-mentioned layer D, and which is positioned between the layer B and the layer D.

With respect to the composition of the layer C, $Y/(X + Y)$ is preferably 0.2 to 0.9, when the amount of the thermoplastic acrylic resin is X (parts by mass), and the total amount of the multifunctional (meth)acrylate and the urethane (meth)acrylate is Y (parts by mass). When $Y/(X + Y)$ is in the above-mentioned range, a difference in coefficient of linear expansion between the layer B and the layer C and that between the layer C and the layer D can be reduced to 100 ppm/K or less. A thermal impulse due to the difference in coefficient of linear expansion at the layer B/layer C interface and that at the layer C/layer D interface can be suppressed, so that a laminated film having excellent adhesion and weathering resistance can be obtained. $Y/(X + Y)$ is more preferably 0.3 to 0.8, most preferably 0.4 to 0.75.

The value of Y/(X + Y) can be appropriately controlled by changing the conditions for forming the layer C and layer D, for example, the type of the solvent for or the composition of the coat agent for forming the layer D, or the heat drying temperature or time for the coat agent.

The layer C contains two types of acrylic resins forming the layer B and the below-mentioned layer D, i.e., a thermoplastic acrylic resin and a cured product of an active energy ray-curable acrylate. The state of the layer C containing two types of acrylic resins largely affects the adhesion between layers, various types of durability, and flexing properties. When conducting in-mold lamination molding using the laminated film of the invention, the laminated film of the invention is disposed in a mold which may have a three-dimensional shape, and a molten resin at a high temperature is injected into the mold. Therefore, the laminated film placed in the mold is needed to follow the shape of the mold (or to be able to cope with a complicated shape), and the laminated film is directly in contact with the molten resin at a high temperature so that linear expansion causes a strain, and thus various deforming stresses affect the laminated film. Accordingly, the flexing properties of the laminated film to be placed in the mold largely affect the moldability of in-mold lamination molding.

It is considered that before the layer C is formed, an unreacted multifunctional (meth)acrylate and/or urethane (meth)acrylate is present around polymer chains of the thermoplastic acrylic resin and, after being cured by a reaction of these compounds, a structure is formed in which long polymer chains of the thermoplastic acrylic resin are entangled in a network of three-dimensional crosslinked structure which the multifunctional (meth)acrylate and/or urethane (meth) acrylate forms. The formation of such a structure is considered to cause the laminated film to have flexing properties or weathering resistance or to relax the stress or slip between the layer B and the layer D during in-mold lamination molding. Consequently, not only the adhesion but also the flex resistance can be improved, making it possible to considerably improve the weathering resistance which is largely affected by the stress between layers (particularly between the layer B and the layer D).

The thermoplastic acrylic resin contained in the layer C and the crosslinking reaction cured product of the multifunctional (meth)acrylate and the urethane (meth)acrylate contained in the layer C and the below-mentioned layer D can be found by a microscopic infrared spectroscopy (microscopic FT-IR method).

Specifically, the laminated film of the present disclosure is cut before irradiated with an ultraviolet light, and a cross-section of each of the layers B, C, and D is analyzed using an FT-IR microscope measurement apparatus, and, for example, when a multifunctional acrylate is contained in the layer C, from, for example, the ratio of a peak (810 $cm^{-1}$) derived from the C=C-H structure of the multifunctional acrylate and a peak (around 1,740 $cm^{-1}$) derived from the O-C=O structure of the thermoplastic acrylic resin and multifunctional acrylate, it can be found that the component constituting the layer B and the component constituting a part of the layer D are mixed with each other. When a multifunctional acrylate is not contained in any of the layer C and the layer D, similarly from a specific peak derived from the layer B component, it can be found that the layer C contains both acrylic components of the layer B and the layer D.

As the thermoplastic acrylic resin, the same as those mentioned above constituting the layer B can be used.

Examples of the active energy ray-curable acrylate constituting the layer C include a multifunctional (meth) acrylate and an urethane (meth)acrylate. The layer C contains a cured product of at least one of the multifunctional (meth) acrylate and the urethane (meth)acrylate. That is, the layer C contains a crosslinking reaction cured product of the multifunctional (meth)acrylate, a crosslinking reaction cured product of the urethane (meth)acrylate, a crosslinking reaction cured product (copolymer) of the multifunctional (meth)acrylate and the urethane (meth)acrylate, or a mixture thereof. The term "cured product" indicates a three-dimensional crosslinked polymer or three-dimensional crosslinked copolymer formed by irradiation with an active energy ray. In the case of a three-dimensional crosslinked copolymer, with respect to the copolymerization ratio of the multifunctional (meth)acrylate and the urethane (meth)acrylate, the amount of the multifunctional (meth)acrylate is, for example, 20 to 95 mol%, preferably 50 to 85 mol%, based on the total mole of the multifunctional (meth)acrylate and the urethane (meth)acrylate.

In the crosslinking reaction of the multifunctional (meth)acrylate, the urethane (meth)acrylate, and a copolymer thereof, the double bonds of the (meth)acrylic groups of the multifunctional (meth)acrylate and urethane (meth)acrylate are reacted to form a crosslinked structure, obtaining a cured product which constitutes a cured layer. In this instance, the reaction ratio (reaction percentage) of the double bond of the (meth)acrylic group (in which the reaction ratio is 100% in the state in which all the acrylic groups have been completely reacted) is preferably 25 to 70%, more preferably 40 to 65%. The reaction percentage can be determined by comparing the ratio of a peak (810 $cm^{-1}$) derived from the C=C-H structure of the multifunctional acrylate and a peak (around 1,740 $cm^{-1}$) derived from the O-C=O structure of the thermoplastic acrylic resin and multifunctional acrylate during unreacted, and the ratio of a peak (810 $cm^{-1}$) derived from the C=C-H structure of the multifunctional acrylate and a peak (around 1,740 $cm^{-1}$) derived from the O-C=O structure of the thermoplastic acrylic resin and multifunctional acrylate in the layer C after being cured.

Specific compounds of the multifunctional (meth)acrylate and urethane (meth)acrylate are the same as those for forming the layer D. The layer D is described later.

The layer C preferably has a thickness of 0.3 to 5.0 $\mu$m. When the thickness of the layer C is 0.3 to 5.0 $\mu$m, excellent weathering resistance and impact resistance can be obtained. The thickness of the layer C is more preferably 0.5 to 4.5 $\mu$m, most preferably 1.0 to 4.0 $\mu$m.

-Layer D-

(Layer containing a cured product of an active energy ray-curable acrylate (layer D))

The layer D is a layer containing a cured product of an active energy ray-curable acrylate. Here, the active energy ray-curable acrylate includes the multifunctional (meth)acrylate or urethane (meth)acrylate, or both of them. The cured product of an active energy ray-curable acrylate indicates a three-dimensional crosslinked polymer having the multifunctional (meth)acrylate as a monomer, a three-dimensional crosslinked polymer having the urethane (meth)acrylate as a monomer, or a three-dimensional crosslinked copolymer having the multifunctional (meth)acrylate and urethane (meth) acrylate as monomers. In the case of a three-dimensional crosslinked copolymer, with respect to the copolymerization ratio of the multifunctional (meth)acrylate and the urethane (meth)acrylate, the amount of the multifunctional (meth) acrylate is, for example, 20 to 95 mol%, preferably 50 to 85 mol%, based on the total mole of the multifunctional (meth) acrylate and the urethane (meth)acrylate.

[Multifunctional acrylate]

The multifunctional (meth)acrylate monomer used for forming the layer Dis not particularly limited as long as it has two or more (meth)acrylate groups per molecule, and examples of such monomers include bifunctional (meth)acrylate monomers, such as trimethylolpropane di(meth)acrylate, ethylene oxide-modified trimethylolpropane di(meth)acrylate, propylene oxide-modified trimethylolpropane di(meth)acrylate, glycerol di(meth)acrylate, and bis(2-(meth)acryloyloxyethyl)hydroxyethyl isocyanurate; trifunctional (meth)acrylate monomers, such as pentaerythritol tri(meth)acrylate and ditrimethylolpropane tri(meth)acrylate; and tetrafunctional or multifunctional (meth)acrylate monomers, such as pentaerythritol tetra(meth)acrylate and dipentaerythritol penta(meth)acrylate.

Of these, the multifunctional (meth)acrylate monomer used for forming the layer D is preferably a bi-, tri-, or tetrafunctional (meth)acrylate monomer, further preferably a bifunctional or trifunctional (meth)acrylate monomer.

In the present specification, the term "multifunctional (meth)acrylate monomer" means a multifunctional (meth) acrylate having a molecular weight of less than 2,000.

The layer D may be formed using a monofunctional (meth)acrylate monomer for obtaining a balance between the wear resistance and the flexing properties. In such a case, the amount of the multifunctional (meth)acrylate monomer is preferably 90% by mass or more, more preferably 93% by mass or more, especially preferably 96% by mass or more, based on the total mass of the (meth)acrylate monomers.

[Di(meth)acrylate compound]

The bifunctional (meth)acrylate monomer used for forming the layer D can be an aliphatic or aromatic di(meth) acrylate compound, and is preferably an aliphatic di(meth)acrylate compound.

The aliphatic di(meth)acrylate compound is preferably a compound obtained by bonding an alkyldiol and acrylic acid or methacrylic acid by esterification.

Examples of the aliphatic di(meth)acrylate compounds having a preferred structure include 1,6-hexanediol diacrylate, 1,9-nonanediol diacrylate, and 1,10-decanediol diacrylate.

The aliphatic di(meth)acrylate compound may be obtained by synthesis, or a commercially available aliphatic di(meth)acrylate compound may be used. As the commercially available aliphatic di(meth)acrylate compound, HDDA (manufactured by DAICEL-ALLNEX LTD.), A-HD-N, A-NOD-N, A-DOD-N (each of which is manufactured by Shin-Nakamura Chemical Co., Ltd.), 1,9-DA (manufactured by Kyoeisha Chemical Co., Ltd.), or the like can be used.

The aliphatic di(meth)acrylate monomers may be used individually or in combination of two or more kinds thereof.

When the multifunctional (meth)acrylate monomer contains an aliphatic di(meth)acrylate compound, the amount of the incorporated aliphatic di(meth)acrylate compound is preferably 10 to 80% by mass, more preferably 20 to 70% by mass, further preferably 25 to 60% by mass, based on the total mass of the multifunctional (meth)acrylate monomers.

[Tri(meth)acrylate compound]

The trifunctional (meth)acrylate monomer used for forming the layer D may be an aliphatic tri(meth)acrylate monomer or an aromatic tri(meth)acrylate monomer, and is preferably an aliphatic tri(meth)acrylate monomer or an aromatic ring tri(meth)acrylate monomer optionally containing a heteroatom, more preferably an aliphatic tri(meth) acrylate compound or a tri(meth)acrylate monomer having an isocyanuric ring.

The aliphatic tri(meth)acrylate monomer is preferably pentaerythritol tri(meth)acrylate, ditrimethylolpropane tri(meth)acrylate, or dipentaerythritol penta (meth) acrylate, more preferably pentaerythritol tri(meth)acrylate or pentaerythritol tetra(meth)acrylate.

[Urethane (meth)acrylate]

The urethane (meth)acrylate used for forming the layer D is an acrylate oligomer having an urethane linkage in the molecule thereof, and can impart performance, such as a wear resistance, to the laminated film due to the urethane linkage, and, by controlling the amount of the acrylate, a layer having both excellent flexibility and excellent wear resistance can be formed. The urethane (meth)acrylate can be prepared by subjecting a polyisocyanate compound having two or more isocyanate groups in the molecule thereof and an acrylate having a hydroxyl group in the molecule thereof to reaction, and various types of urethane (meth)acrylate products are commercially available. Examples of commercially available urethane (meth)acrylates include 8BR-600, 8UV-085A, 8UX-116A, manufactured by Taisei Fine Chemical Co., Ltd.

[Isocyanuric ring-containing tri(meth)acrylate monomer]

As the isocyanuric ring-containing tri(meth)acrylate monomer used for forming the layer C, preferred is a compound represented by the following general formula (5).

[Chem. 1]

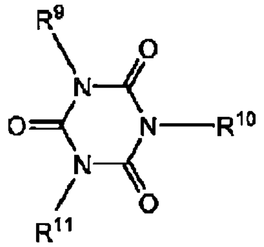

(5)

In the general formula (5) above, each of $R^9$, $R^{10}$, and $R^{11}$ independently represents a group represented by the following formula (5-a).

[Chem. 2]

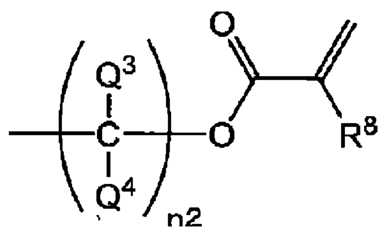

(5-a)

In the formula (5-a) above, n2 represents an integer of 2 to 4, $R^8$ represents a hydrogen atom or a methyl group, and each of $Q^3$ and $Q^4$ independently represents a hydrogen atom or an alkyl group having 1 to 5 carbon atoms in the repeating units.

As an example of a preferred structure of the isocyanuric ring-containing tri(meth)acrylate monomer, there can be mentioned a compound having a structure represented by the following (5A).

[Chem. 3]

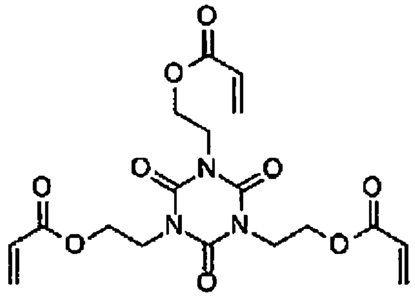

(5A)

The isocyanuric ring-containing tri(meth)acrylate monomer may be obtained by synthesis, or a commercially available isocyanuric ring-containing tri(meth)acrylate monomer may be used. As the commercially available isocyanuric ring-containing tri(meth)acrylate monomer, M-315 (manufactured by Toagosei Co., Ltd.), A9300 (manufactured by Shin-Nakamura Chemical Co., Ltd.), FA-731A (manufactured by Hitachi Chemical Co., Ltd.), SR368 (manufactured by Sartomer (Arkema Group)), M-370 (manufactured by MIWON Specialty Chemical Co., Ltd.), or the like can be used.

[Amount of the incorporated isocyanuric ring-containing tri(meth)acrylate compound monomer]

The amount of the incorporated isocyanuric ring-containing tri(meth)acrylate monomer used for forming the layer C is preferably 20 to 70% by mass, more preferably 30 to 69% by mass, further preferably 35 to 68% by mass, based on the total mass of the multifunctional (meth)acrylate monomers.

From the viewpoint of the balance between the hardness and the flexibility, wear resistance, adhesion, and the like, the multifunctional (meth)acrylate monomer used for forming the layer D is especially preferably a bifunctional (meth) acrylate (preferably an aliphatic di(meth)acrylate monomer, more preferably a compound obtained by bonding an alkyldiol and acrylic acid or methacrylic acid by esterification) or a trifunctional (meth)acrylate monomer (preferably an aliphatic tri(meth)acrylate monomer or a tri(meth)acrylate monomer having an isocyanuric ring, more preferably pentaerythritol tri(meth)acrylate, ditrimethylolpropane tri(meth)acrylate, or a compound represented by the general formula (5) above, further preferably pentaerythritol tri(meth)acrylate or a compound having a structure represented by the formula (5A) above).

The multifunctional (meth)acrylate contained in the layer D is preferably a polymer of the above-mentioned multifunctional (meth)acrylate monomer (multifunctional (meth)acrylate polymer).

The multifunctional (meth)acrylate polymer may contain an oligomer from the viewpoint of the balance between the wear resistance and the bonding properties or the like.

In the present specification, the term "multifunctional (meth)acrylate oligomer" means a polymer of multifunctional (meth)acrylate having a weight average molecular weight of 2,000 or more and less than 50,000. In the present specification, the term "multifunctional (meth)acrylate polymer" means a polymer of multifunctional (meth)acrylate having a weight average molecular weight of 50,000 or more.

From the viewpoint of the wear resistance and heat bending properties, the polymer of a multifunctional (meth) acrylate monomer preferably has a weight average molecular weight of 50,000 or more, more preferably 100,000 or more, further preferably 200,000 or more.

The multifunctional (meth)acrylate polymer may be either a homopolymer or a copolymer, and is more preferably a copolymer.

[Amount of the multifunctional (meth)acrylate and/or urethane (meth)acrylate contained]

The multifunctional (meth)acrylate (preferably multifunctional (meth)acrylate polymer) contained in the layer D may be individually used or two or more kinds thereof may be used in combination.

The amount of the multifunctional (meth)acrylate contained in the layer D is 35 to 95% by mass, preferably 40 to 90% by mass, more preferably 50 to 90% by mass, based on the total mass of the multifunctional (meth)acrylate and at least one of the inorganic fine particles and the silicon compound hydrolyzation condensation product.

When the amount of the multifunctional (meth)acrylate contained in the layer D is in the above range, excellent wear resistance, adhesion and the like can be obtained.

The amount (% by mass) of the multifunctional (meth)acrylate contained in the layer D can be determined by

scraping a part of the layer D and conducting pyrolysis gas chromatography using the scraped piece of the layer D as mentioned above to specify the compound contained in the layer D, and specifying the composition of the layer D from a combination of the obtained result and the results of characteristic absorption of the layer D by the infrared spectroscopy measurement conducted in the wavenumber region of 650 to 4,000 $cm^{-1}$.

[Reaction ratio of the multifunctional (meth)acrylate and/or urethane (meth)acrylate]

From the viewpoint of the wear resistance, adhesion, and the like, the addition polymerization reaction ratio (hereinafter, frequently referred to simply as "reaction ratio") of the (meth)acrylic group of multifunctional (meth)acrylate and/or urethane (meth)acrylate is preferably 30 to 70%, more preferably 40 to 68%, further preferably 45 to 65%.

The reaction ratio of the multifunctional (meth)acrylate and/or urethane (meth)acrylate in the layer D is determined as a value which is obtained by determining the composition of the inorganic fine particle dispersion by the above-mentioned measurement method for the amount ratio of the multifunctional (meth)acrylate and at least one of the inorganic fine particles and the silicon compound hydrolyzation condensation product in the layer D, and further conducting an infrared spectroscopy (ATR-IR) measurement by an attenuated total reflection spectroscopy method with respect to the surface of the layer D, and making a calculation from a peak (around 1,740 $cm^{-1}$) derived from the (meth) acryl ester and a peak (around 810 $cm^{-1}$) derived from the (meth)acrylic monomer and urethane (meth)acrylate monomer using the formulae (1) to (4) or (5) below.

(1) The surface of the layer D is subjected to ATR-IR measurement in the wavenumber region of 650 to 2,000 $cm^{-1}$, and, in each of the obtained results of the measurement, from a measured infrared absorbance $\alpha m$ of the formula (1) below at 1,900 $cm^{-1}$ and 2,000 $cm^{-1}$, a background infrared absorbance $\alpha b$ represented by the formula (2) below is determined.

Measured infrared absorbance $\alpha m$ (wavelength)

$$= -\mathrm{Log}(R\ (\mathrm{wavelength})/100) \qquad (1)$$

In the formula above, R represents a reflectance of attenuated total reflection of a measurement sample at a wavelength for measurement.

Background infrared absorbance $\alpha b$ (wavelength p)

$$= \alpha m_{(1,900)} \text{ at } 1,900\ cm^{-1} + (\text{wavelength p} - 1,900) \times (\alpha m_{(2,000)} \text{ at } 2,000\ cm^{-1} - \alpha m_{(1,900)} \text{ at } 1,900\ cm^{-1})/100\ (2) \qquad (2)$$

(2) From the above-obtained background infrared absorbance value, a converted infrared absorbance $\alpha c_{(\text{wavelength p})}$ is calculated by the following formula (3).

$$\alpha c_{(\text{wavelength p})} = \alpha m_{(\text{wavelength p})} - \alpha b_{(\text{wavelength p})} \qquad (3)$$

(3) The reaction ratio r of the double bond in the multifunctional (meth)acrylate and urethane (meth)acrylate is determined from the results of the ATR-IR measurement of the layer D before and after subjected to curing reaction using the following formula (4) or (5).

The reaction ratio r is determined from:
Reaction ratio r of the double bond in the multifunctional (meth)acrylate and urethane methacrylate

$$= [1 - (\alpha c1_{(810)}/\alpha c1_{(1,740)})/(\alpha c0_{(810)}/\alpha c0_{(1,740)})] \times 100 \qquad (4)$$

That is, the reaction ratio r is determined from:

$$r = [1 - (\alpha c1_{(810)} \times \alpha c0_{(1,740)})/(\alpha c0_{(810)} \times \alpha c1_{(1,740)})] \times 100\ (5) \qquad (5)$$

In the formula (3) or (4) above, $\alpha c0$ (wavelength) represents a converted infrared absorbance of the layer D before subjected to curing reaction, and $\alpha c1_{(\text{wavelength})}$ represents a converted infrared absorbance after the ATR-IR

measurement.

The wavelength 810 means a peak derived from the (meth)acrylate functional group contained in double bonds in the multifunctional (meth)acrylate and urethane (meth)acrylate, and the wavenumber 1,740 $cm^{-1}$ means a peak derived from the (meth)acryl ester group contained in the multifunctional (meth)acrylate and urethane (meth)acrylate.

From the viewpoint of excellent wear resistance and adhesion, the total content of the multifunctional (meth) acrylate and the urethane acrylate is preferably 45 to 97% by mass, more preferably 65 to 92% by mass, based on the total mass of the multifunctional (meth)acrylate, the urethane (meth)acrylate, the inorganic fine particles, and the silicon compound hydrolyzation condensation product. The amount of the incorporated multifunctional (meth)acrylate monomer is preferably 40 to 98% by mass, more preferably 45 to 96% by mass, more preferably 60 to 70% by mass.

[Inorganic fine particles (D3)]

The layer D contains at least one of inorganic fine particles and a silicon compound hydrolyzation condensation product. As the inorganic fine particles, inorganic oxide fine particles are preferred. Examples of inorganic oxide fine particles include titanium oxide, zinc oxide, cerium oxide, and silicon dioxide (silica). Of these, preferred are silica fine particles, such as colloidal silica.

Examples of commercially available colloidal silica include methanol silica sol, IPA-ST, PGM-ST, MEK-ST, NBA-ST, XBA-ST, DMAC-ST, ST-UP, ST-OUP, ST-20, ST-40, ST-C, ST-N, ST-O, ST-50, ST-OL (all of which are product names), manufactured by Nissan Chemical Corporation.

Further, as the silica fine particles, silica fine particles having the dispersibility improved by a known method may be used. Examples of such silica fine particles having the dispersibility improved include silica fine particles which have been subjected to surface treatment with a reactive silane coupling agent having a hydrophobic group, and silica fine particles modified with a compound having (a)an (meth)acryloyl group. Examples of commercially available colloidal silica modified with a compound having (a)an (meth)acryloyl group include MIBK-SD, MIBK-AC, MEK-AC, PGM-AC (all of which are product names), manufactured by Nissan Chemical Corporation.

The shape or form of the silica fine particles is not particularly limited, and silica fine particles having a spherical shape, a hollow form, a porous form, a rod shape, a plate shape, a fibrous form, or an indefinite shape can be used. For example, as commercially available hollow silica fine particles, SiliNax (registered trademark), manufactured by Nittetsu Mining Co., Ltd., or the like can be used.

The inorganic oxide fine particles preferably have an average primary particle diameter of 1 to 200 nm, more preferably 1 to 100 nm. When the average primary particle diameter of the inorganic oxide fine particles is in the above range, a laminated film having excellent wear resistance, adhesion and the like can be obtained.

From the viewpoint of the dispersibility in the layer D, the average primary particle diameter of the inorganic oxide fine particles is preferably 3 to 500 nm, more preferably 5 to 300 nm, further preferably 10 to 100 nm.

From the viewpoint of the dispersibility in the layer D, the inorganic oxide fine particles are preferably colloidal silica having a spherical shape and having an average primary particle diameter of 5 to 100 nm, more preferably colloidal silica having an average primary particle diameter of 20 to 60 nm.

The average primary particle diameter of the inorganic oxide fine particles is measured by observing the layer D in the cross-section of the laminated film of the present disclosure by means of a transmission electron microscope (TEM).

[Amount of the incorporated inorganic fine particles]

A single type of the inorganic fine particles may be used, or two or more types of the inorganic fine particles may be used in combination.

The amount of the incorporated inorganic fine particles is preferably 5 to 40% by mass, based on the total mass of the multifunctional (meth)acrylate compound, the urethane (meth)acrylate, the silicon compound hydrolyzation condensation product, and the inorganic fine particles, and, from the viewpoint of excellent wear resistance, adhesion, and the like, the amount of the incorporated inorganic fine particles is preferably 8 to 35% by mass, further preferably 12 to 30% by mass.

[Silicon compound hydrolyzation condensation product]

Preferred examples of silicon compound hydrolyzation condensation products include a hydrolyzable silane compound.

Examples of hydrolyzable silane compounds include a hydrolyzation condensation product of an alkoxysilane compound.

Specific examples of such hydrolyzation condensation products include hydrolyzation condensation products of an alkyltrialkoxysilane, such as methylmethoxysilane, methyltriethoxysilane, ethyltrimethoxysilane, or ethyltriethoxysilane; a 3-(meth)acryloyloxypropyltrialkoxysilane, such as 3-(meth)acryloyloxypropyltrimethoxysilane or 3-(meth)acryloyloxypropyltriethoxysilane; a vinyltrialkoxysilane, such as vinyltrimethoxysilane or vinyltriethoxysilane; or an alkoxysilane compound, such as aminomethyltrimethoxysilane, aminomethyltriethoxysilane, 2-aminoethyltrimethoxysilane, 2-aminoethyltriethoxysilane, 3-aminopropyltrimethoxysilane, or 3-aminopropyltriethoxysilane.

The hydrolyzation condensation product of an alkoxysilane compound is obtained by subjecting an alkoxysilane compound to hydrolyzation condensation reaction. In the hydrolyzation condensation reaction, it is preferred that both hydrolyzation and a condensation reaction proceed, so that the most part of Si-OR, which is a hydrolyzable group of the hydrolyzable silane compound, is hydrolyzed 100%. It is preferred that the most part of, preferably 80% or more of, more preferably 85% or more of, especially preferably 90% or more of the OH group formed due to hydrolyzation is condensed with a hydroxyl group formed due to hydrolyzation of another alkoxysilane compound in view of the liquid stability.

The silicon compound hydrolyzation condensation product may be one which is obtained by subjecting an alkoxysilane compound alone to hydrolyzation reaction, or may be one which is obtained by subjecting an alkoxysilane compound to hydrolyzation reaction in the presence of the above-mentioned inorganic oxide fine particles, but, from the viewpoint of the dispersibility of the inorganic oxide fine particles, it is preferred that the silicon compound hydrolyzation condensation product is one which is obtained by subjecting an alkoxysilane compound to hydrolyzation reaction in the presence of the inorganic oxide fine particles.

As the silicon compound hydrolyzation condensation product, for improving the dispersibility of the inorganic fine particles, there may be used one which is obtained by reacting (a)an (meth)acrylic resin having an alkoxysilyl group in the side chain or (a)an (meth)acrylic resin having in the side chain a highly polar hydroxyl group, amine group, or carboxyl group with inorganic oxide fine particles and/or a hydrolyzable silane compound.

[Triazine ultraviolet light absorber (D4)]

The layer containing a cured product of an active energy ray-curable acrylate (layer D) in the present disclosure preferably contains a triazine ultraviolet light absorber (D4).

As an example of the triazine ultraviolet light absorber (D4), there can be mentioned an ultraviolet light absorber having a triazine skeleton in the molecular skeleton.

The triazine ultraviolet light absorber (D4) exhibits excellent ultraviolet light absorbing ability by virtue of having the above-mentioned structure. Accordingly, the layer D in the present disclosure has excellent light resistance.

Specific examples of the triazine ultraviolet light absorbers (D4) include 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2-ethylhexyloxy)propyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine.

The triazine ultraviolet light absorber (C4) may be obtained by synthesis, or a commercially available triazine ultraviolet light absorber may be used. As the commercially available triazine ultraviolet light absorber, TINUVIN 400 (manufactured by BASF AG), TINUVIN 405 (manufactured by BASF AG), or TINUVIN 479 (manufactured by BASF AG) can be used.

The triazine ultraviolet light absorber (D4) is preferably 2-[4-(octyl-2-methylethanoate)oxy-2-hydroxyphenyl]-4,6-[bis(2,4-dimethylphenyl)]-1,3,5-triazine, or 2-[4-(2-hydroxy-3-dodecyloxy-propyl)oxy-2-hydroxyphenyl]-4,6-[bis(2,4-dimethylphenyl)-1,3,5-triazine.

The triazine ultraviolet light absorbers (D4) may be used individually or in combination of two or more kinds thereof.

The amount of the triazine ultraviolet light absorber (D4) incorporated, relative to 100 parts by mass of the total of the multifunctional (meth)acrylate and/or urethane (meth)acrylate and at least one of the inorganic fine particles and the silicon compound hydrolyzation condensation product, is preferably 3 to 5 parts by mass, and, from the viewpoint of the wear resistance, adhesion after heat bending, and weathering resistance, the amount of the triazine ultraviolet light absorber (D4) incorporated is more preferably 3.5 to 4.5 parts by mass.

[Hindered amine (light stabilizer (D5))]

The layer containing a cured product of an active energy ray-curable acrylate (layer D) in the present disclosure preferably contains a hindered amine light stabilizer (D5). As an example of the hindered amine light stabilizer (D5), there can be mentioned a compound in which two of three substituents for nitrogen atom in the amine compound (including a compound in which two substituents and the nitrogen atom form a cyclic structure) have a structure of large steric hindrance.

The hindered amine light stabilizer (D5) has the above-mentioned structure, and therefore can react with active species (radicals) generated in the coat layer to inactivate the species.

Specific examples of the hindered amine light stabilizers (D5) include alkyl-type hindered amines, such as bis(1,2,2,6,6-pentamethylpiperidin-4-yl)=3,4-bis{[(1,2,2,6,6-pentamethylpiperidin-4-yl)oxy]carbonyl}hexanedioate, bis(1,2,2,6,6-pentamethyl-4-piperidyl)=decanedioate, and 1,2,2,6,6-pentamethyl-4-piperidyl=methacrylate; hydrogen-type hindered amines, such as bis(2,2,6,6-tetramethylpiperidin-4-yl)=3,4-bis{[(2,2,6,6-tetramethylpiperidin-4-yl)oxy]carbonyl}hexanedioate, and 2,2,6,6-tetramethyl-4-piperidyl=methacrylate; and alkoxy-type hindered amines, such as bis [2,2,6,6-tetramethyl-1-(undecyloxy)piperidin-4-yl]=carbonate, and 1-octyloxy-2,2,6,6-tetramethyl-4-piperidyl=octanedioate.

The hindered amine may be obtained by synthesis, or a commercially available hindered amine may be used.

As the commercially available hindered amine, TINUVIN 123 (manufactured by BASF AG), LA-52 (manufactured by ADEKA Corporation), LA-57 (manufactured by ADEKA Corporation), LA-68 (manufactured by ADEKA Corporation), LA-72 (manufactured by ADEKA Corporation), LA-77 (manufactured by ADEKA Corporation), LA-81 (manufactured by ADEKA Corporation), LA-82 (manufactured by ADEKA Corporation), LA-87 (manufactured by ADEKA Corporation), or the like can be used.

The hindered amines may be used individually or in combination of two or more types thereof.

The amount of the hindered amine incorporated, relative to 100 parts by mass of the total of the multifunctional (meth)acrylate and/or urethane (meth)acrylate and at least one of the inorganic fine particles and the silicon compound hydrolyzation condensation product, is preferably 0.5 to 30 parts by mass, and, from the viewpoint of the wear resistance, adhesion, and weathering resistance, the amount of the hindered amine incorporated is more preferably 3 to 20 parts by mass.

[Additional component]

The layer containing a cured product of an active energy ray-curable acrylate (layer D) in the present disclosure, if necessary, may contain a component (additional component) other than those mentioned above. Examples of additional components include a surface modifier, a coloring agent, and a dispersing medium for the purpose of controlling the solids content and viscosity of the dispersion.

The dispersing medium may be any liquid medium as long as the effects of the present disclosure are not sacrificed, and examples of such media include various types of organic solvents.

When the means for curing the layer containing a cured product of an active energy ray-curable acrylate (layer D) in the present disclosure is an ultraviolet light, the layer preferably further contains a photopolymerization initiator. As the photopolymerization initiator, a known photopolymerization initiator can be used, and, for example, at least one member selected from the group consisting of acetophenones, benzyl ketals, and benzophenones can be preferably used. Examples of the acetophenones include diethoxyacetophenone, 2-hydroxy-2-methyl-1-phenylpropan-1-one, 1-(4-isopropylphenyl)-2-hydroxy-2-methylpropan-1-one, and 4-(2-hydroxyethoxy)phenyl-(2-hydroxy-2-propyl) ketone. Examples of the benzyl ketals include 1-hydroxycyclohexyl-phenyl ketone and benzyl dimethyl ketal.

Examples of the benzophenones include benzophenone and methyl o-benzoylbenzoate.

Examples of the benzoins include benzoin, benzoin methyl ether, and benzoin isopropyl ether.

The photopolymerization initiators may be used individually or in combination of two or more kinds thereof.

The amount of the photopolymerization initiator used is preferably 1 to 15 parts by mass, more preferably 2 to 10 parts by mass, relative to 100 parts by mass of the total of the multifunctional (meth)acrylate and/or urethane (meth) acrylate and at least one of the inorganic fine particles and the silicon compound hydrolyzation condensation product.

As an example of the measurement method for the amount ratio of the cured product of at least one of the multifunctional (meth)acrylate and the urethane (meth)acrylate and at least one of the inorganic fine particles and the silicon compound hydrolyzation condensation product, which constitute the layer D, there can be mentioned a method using a combination of a method in which the layer D of the laminated film is scraped and analyzed by pyrolysis gas chromatography in respect of the types of compounds present in the layer, or a method in which the ratio of a peak (around 1,740 $cm^{-1}$) derived from the multifunctional (meth)acrylate and urethane (meth)acrylate and the ratio of a peak (around 1,100 $cm^{-1}$ for silica) derived from at least one of the inorganic fine particles and the silicon compound hydrolyzation condensation product are compared by a compositional analysis method by elemental analysis or infrared spectroscopy (ATR-IR) by an attenuated total reflection spectroscopy method with respect to the surface of the layer D, or by measurement of transmission IR with respect to the cross-section of the layer D obtained by cutting the laminated film in the thicknesswise direction.

The thickness of the layer D is not particularly limited, and, from the viewpoint of the wear resistance, heat bending properties, and adhesion after heat bending, the thickness of the layer D is preferably in the range of 1.5 to 18 $\mu$m, more preferably in the range of 3 to 15 $\mu$m, further preferably 5 to 12 $\mu$m.

The thickness of the layer D is determined by the same method as mentioned above for the thickness of the layer B and layer C.

Further, from the viewpoint of the wear resistance and weathering resistance, the total of the thickness of the layer

C and the thickness of the layer D is preferably 3 to 20 μm, more preferably 4 to 15 μm.

From the viewpoint of the transparency (initial haze) and flexing properties, the ratio of the thickness of the layer C to the total of the thickness of the layer C and the thickness of the layer D is preferably 10 to 70%, more preferably 25 to 60%.

[Method for producing the laminated film]

With respect to the method for producing the laminated film of the invention, there is no particular limitation, but there can be mentioned a method in which a layer containing a thermoplastic acrylic resin (layer B) is first formed on a layer containing a polycarbonate resin (layer A), and then an acrylic resin mixture intermediate layer (layer C) and a layer containing a cured product of an active energy ray-curable acrylate (layer D) are formed on the layer B.

The method for forming a layer containing a thermoplastic acrylic resin (layer B) on a layer containing a polycarbonate resin (layer A) is not particularly limited, and a known method can be employed. For example, there can be mentioned a method in which individual sheets or films for the layers are separately formed and pressed together while heating, a method in which an adhesive is preliminarily applied to a surface of at least any one of layers are bonded together, a co-extrusion method in which the polycarbonate resin and the thermoplastic acrylic resin are laminated in a die of an extruder to obtain a sheet or a laminated article in a sheet form, an in-mold molding method in which the thermoplastic acrylic resin is first subjected to vacuum forming, and then the polycarbonate resin forming a substrate is subjected to injection molding, and a method in which a coating liquid having the thermoplastic acrylic resin dissolved in a solvent is applied onto the layer A, and then dried to remove the solvent. For reducing the cost and improving the productivity, a co-extrusion method or an in-mold molding method is preferred. Particularly, from the viewpoint of the cost and productivity, a co-extrusion method is preferred.

-Method for forming the layer C and layer D-

With respect to the method for forming the layer C and layer D, there is no particular limitation, and the layer C and the layer D may be separately formed, or the layer C and the layer D may be simultaneously formed. For example, a method may be employed in which a composition containing the multifunctional (meth)acrylate and/or urethane (meth)acrylate and the thermoplastic acrylic resin forming the layer B is applied to the surface of the layer B and cured to form a layer C, and a coating composition containing at least one of the multifunctional (meth)acrylate and the urethane (meth)acrylate and at least one of the inorganic fine particles and the silicon compound hydrolyzation condensation product, for forming the layer D, and containing an organic solvent is applied onto the layer C and cured to form a layer D, or a method may be used in which a coating composition containing at least one of the multifunctional (meth)acrylate and the urethane (meth) acrylate and at least one of the inorganic fine particles and the silicon compound hydrolyzation condensation product, for forming the layer D, and containing an organic solvent is applied to the surface of the layer B, and subjected to heating treatment to permit part of the layer D component to penetrate into the layer B, so that the layer C and the layer D are simultaneously formed.

As compared to the former method, the latter method in which the layer C and the layer D are simultaneously formed advantageously requires a small number of steps and thus has high productivity. The latter method is described below.

In the method in which the layer C and the layer D are simultaneously formed, it is preferred that a difference between a value determined from a weighted average of solubility parameters of the components forming the layer D and a solubility parameter of the thermoplastic (meth)acrylic resin constituting the layer B is 10 ($(MPa)^{1/2}$) or less.

When the difference of solubility parameters is in the above-mentioned range, after the layer D is applied to the layer B, diffusion due to molecular motion is caused in the contact surface of the layer D and the layer B, so that both components of the acrylic resins forming the layer B and the layer D are mixed with each other to form a mixture intermediate layer (layer C).

In this method, predetermined amounts of the components finally constituting the layer D (multifunctional (meth) acrylate, urethane (meth)acrylate, inorganic fine particles, and silicon compound hydrolyzation condensation product) are dissolved or dispersed in a solvent, such as an organic solvent, to prepare a coating composition. In this instance, in the predetermined amounts of the components, a desired amount of the multifunctional (meth)acrylate or urethane (meth) acrylate forming the layer C is added. Then, the coating composition is applied to the surface of the layer B which is opposite to the layer A, and then dried for a predetermined period of time to remove the solvent, forming a film. Then, the film is irradiated with an active energy ray, such as an ultraviolet light or an electron beam, to cause the multifunctional (meth)acrylate and urethane (meth)acrylate to be reacted and cured, so that a layer D is formed on the layer B through the layer C.

With respect to the method for applying the coating composition, there is no particular limitation, but, for example, there can be mentioned application methods conventionally known and commonly used, such as a brushing method, a roller coating method, a spray coating method, a dip coating method, a flow coater coating method, a roll coater coating

method, and an electrodeposition coating method.

In the case of the method in which the layer C and the layer D are simultaneously formed, the thickness of the layer C can be appropriately controlled by changing the drying temperature and drying time.

With respect to the method for drying the film of the composition applied, there is no particular limitation, and examples thereof include natural drying, air drying, and a drying method by heating.

The drying temperature is preferably 65 to 95°C, more preferably 70 to 85°C.

Further, from the viewpoint of the thickness required for effectively exhibiting a weathering resistance, the drying time is preferably 5 to 20 minutes, more preferably 5 to 15 minutes, further preferably 5 to 13 minutes.

As the solvent, preferred is an organic solvent which can dissolve therein the multifunctional (meth)acrylate, urethane (meth)acrylate, and the like, and which can dissolve or disperse therein the inorganic fine particles and silicon compound hydrolyzation condensation product. For example, from the viewpoint of enabling control of the thickness of the acrylic resin mixture intermediate layer (layer C) to be in a preferred range, examples of organic solvents include alcohols, such as methanol, ethanol, propanol, and butanol; ethers, such as dimethyl ether, diethyl ether, methylethyl ether, methylbutyl ether, tetrahydrofuran, and dioxane; ketones, such as acetone, methyl ethyl ketone (2-butanone), methyl isobutyl ketone (4-methyl-2-pentanone), and cyclohexanone; esters, such as methyl acetate, ethyl acetate, propyl acetate, butyl acetate, ethyl propionate, and ethyl valerate; ether alcohols, such as methoxyethanol, ethoxyethanol, butoxyethanol, methoxypropanol (hereinafter, referred to also as "propylene glycol monomethyl ether (PGM)"), ethoxypropanol, and butoxypropanol; aliphatic hydrocarbons, such as hexane, heptane, and octane; and aromatic hydrocarbons, such as toluene, xylene, (ethylbenzene), styrene, and stilbene.

The organic solvents can be used individually or in combination.

When the organic solvents are individually used, from the viewpoint of the solubility of the acrylate monomer contained when forming the layer containing a cured product of an active energy ray-curable acrylate (layer D), and the penetrating properties into the thermoplastic acrylic resin layer (layer B), ether alcohols, such as methoxyethanol, ethoxyethanol, butoxyethanol, methoxypropanol, ethoxypropanol, and butoxypropanol, are preferably used, and, of these, particularly, from the viewpoint of the balance between the volatility, the dissolving power for acrylic resin, and the penetrating properties into the thermoplastic acrylic resin layer (layer B), and low toxicity, methoxypropanol is especially preferably used.

When the organic solvents are used in combination, from the viewpoint of easily forming the layer C, a mixed solvent of the ether alcohol, which is mentioned above as examples of the organic solvents that are individually used, and at least one organic solvent selected from the group consisting of ketones, such as acetone, methyl ethyl ketone (2-butanone), methyl isobutyl ketone (4-methyl-2-pentanone), or cyclohexanone, esters, such as methyl acetate, ethyl acetate, propyl acetate, butyl acetate, ethyl propionate, or ethyl valerate, and aromatic hydrocarbons, such as toluene, xylene, (ethylbenzene), styrene, or stilbene, is preferably used, and a mixed solvent of the ether alcohol and at least one organic solvent selected from the group consisting of methyl ethyl ketone, ethyl acetate, butyl acetate, and toluene is more preferably used, and a mixed solvent of methoxypropanol and at least one organic solvent selected from the group consisting of methyl ethyl ketone, ethyl acetate, butyl acetate, and toluene is especially preferably used because such a mixed solvent has a boiling point in the range of from 70 to 140°C so that volatilization of the solvent and an unnecessary increase of the thickness of the penetration layer can slow down when the substrate is dried by heating after applying the hard coat.

In view of the volatility during application and recovery of the solvent, methyl ethyl ketone (MEK) or methoxypropanol (propylene glycol monomethyl ether) is preferred.

The amount of the organic solvent contained is preferably 40 to 70 parts by mass, more preferably 45 to 65 parts by mass, relative to 100 parts by mass of the inorganic fine particle dispersion.

In the present invention, there can be provided a laminated film having not only excellent adhesion between the layers, impact resistance, flexing properties, and wear resistance but also excellent weathering resistance. Therefore, the laminated film of the invention is useful as a thermoforming film for in-mold lamination molding and the like or a decorative film. For example, when the laminated film of the invention is used for in-mold lamination molding, the laminated film is first disposed so that the layer D of the laminated film is in contact with a mold, and then injection molding is conducted to inject a molten thermoplastic resin (for example, a polycarbonate resin) into the mold, so that a polycarbonate resin-molded article decorated with the laminated film can be obtained. The thus obtained resin-molded article has a thermoplastic resin layer (for example, a polycarbonate layer) formed in contact with the surface on the layer A side of the laminated film. Examples

Hereinbelow, the present disclosure will be described in detail with reference to the following Examples, which should not be construed as limiting the scope of the present disclosure. In the following Examples, the units "%" and "part(s)" mean "% by mass" and "part(s) by mass", respectively, unless otherwise specified.

[Evaluation method]

<Total light transmittance (TT)>

A total light transmittance was measured using NDH-300A, manufactured by Nippon Denshoku Industries Co., Ltd., in accordance with JIS K7361-1 (1997).

<Initial haze (H)>

An initial haze was measured using a haze meter NDH2000, manufactured by Nippon Denshoku Industries Co., Ltd. A haze value (H) is represented by: H = Td/Tt × 100 (Td: scattered light transmittance; Tt: total light transmittance).

<Wear resistance (ΔH)>

Before the Taber abrasion test, the surface of an abrasive wheel (product name: CS-10F, manufactured by Taber Industries) was subjected to 25-revolution abrasion using abrasive stone ST-11, manufactured by Taber Industries, preparing an abrasive wheel. With respect to the surface of the layer D of the laminated film, a Taber abrasion test was conducted using the prepared abrasive wheel under conditions at a load of 500 g with 500 revolutions in accordance with ASTM D1044, and a change of the haze value (ΔH) of the surface of the laminated film before and after the Taber abrasion test was measured.
A change of the haze value (ΔH) was measured using a haze meter (product name: NDH2000, manufactured by Nippon Denshoku Industries Co., Ltd.) by measurement method 2 using A light source. The haze value (H) is a value indicated by: H = Td/Tt × 100 (Td: scattered light transmittance; Tt: total light transmittance).
The measurement of a haze value (H) was made with respect to three test specimens of the same abrasion condition, and an average of ΔH values was evaluated in accordance with the criteria shown below. The smaller the ΔH value, the more excellent the wear resistance, and the ΔH is preferably less than 9.0.
With respect to the abrasive wheel used in the Taber abrasion test, there was used such an abrasive wheel that, when commercially available float glass (plate glass) is subjected to Taber abrasion test by the same method as mentioned above under conditions at a load of 500 g with 1,000 revolutions, a change of the haze value (ΔH) is in the range of from 0.6 to 1.0. The abrasive wheel which causes the ΔH to fall outside of the above-mentioned range was not used in the test.

<Boiling water resistance (adhesion)>

A laminated film was immersed in boiling water for 3 hours and then taken out, and water droplets deposited were wiped from the film, and the resultant laminated film was conditioned in an environment at 25°C at 50% RH for 15 minutes. The surface of the layer D of the laminated film taken out was cut using a cutting knife in a lattice pattern with a width of 1 mm so that the number of squares in the lattice pattern was 100, and an adhesive tape (trade name "CELLOTAPE (registered trademark)"), manufactured by Nichiban Co., Ltd., was put on the lattice pattern and strongly vertically peeled off the laminated film (in accordance with JIS K5400). When part of the film in a laminated film was peeled off in the first peeling operation, the laminated film was rated as "×"; when peeling of the film in a laminated film was not caused in the first peeling operation, but part of the film was peeled off in the second peeling operation, the laminated film was rated as "Δ"; and, when peeling of the film in a laminated film was not caused in any of the two peeling operations, the laminated film was rated as "O".

<Flexing properties>

The laminated film was wound round a cylinder having a diameter of 18 mm and 36 mm so that the layer D was positioned outside. When a laminated film had no change in the appearance even after being wound round the cylinder having a diameter of 18 mm, the film was rated as "O"; when a crack was formed in a laminated film after wound round the cylinder having a diameter of 18 mm, but the film had no change in the appearance after being wound round the cylinder having a diameter of 36 mm, the film was rated as "Δ"; and, when a crack was formed in a laminated film after wound round the cylinder having a diameter of 36 mm, the film was rated as "×".

<Impact resistance>

A laminated film was set on the bearer of a DuPont impact tester having a planar bearer (DuPont impact tester No. 451, manufactured by Toyo Seiki Seisaku-Sho, Ltd.) so that the layer D of the laminated film faced above, and an impactor having a cone portion with an apex radius of 12.7 mm was placed on the laminated film, and a falling weight of 300 g was permitted to fall onto the impactor from a height of 20 cm. After the test, the laminated film was observed. When a depression having a depth of 1 mm or less was formed in the surface of the tested portion of a laminated film, but peeling of

the layer D or formation of a crack was not caused, the laminated film was rated as "O"; when a depression having a depth of more than 1 mm was formed in the surface of the tested portion of a laminated film, but peeling of the layer D or formation of a crack was not caused, the laminated film was rated as "Δ"; and, when peeling of the layer D of a laminated film or formation of a crack in the layer D was caused, the laminated film was rated as "×".

<Weathering resistance>

A laminated film was set in Super xenon weatherometer SX-75 tester, manufactured by Suga Test Instruments Co. Ltd., so that the layer D faced the light source side, and subjected to exposure test for 2,000 and 4,000 hours under conditions such that the UV irradiation intensity was 180 $W/m^2$, the black panel temperature was 63°C, and rainfall was made for 18 minutes per 120 minutes. The laminated film was taken out from the weatherometer and the appearance of the film was observed, and then the surface of the film was cleaned by lightly rubbing using a sponge soaked with a neutral detergent, and then the surface of the layer D was cut using a cutting knife in a lattice pattern with a width of 1 mm so that the number of squares in the lattice pattern was 100, and an adhesive tape (trade name "CELLOTAPE (registered trademark)"), manufactured by Nichiban Co., Ltd., was put on the lattice pattern and strongly vertically peeled off the laminated film, and this cycle of operations of putting and peeling the adhesive tape was repeated two times. When a laminated film suffered formation of a crack in the appearance or delamination after the 2,000 hour exposure test, the laminated film was rated as "×"; when a laminated film sample had both excellent appearance and excellent adhesion after the 2,000 hour exposure test, but suffered formation of a crack or delamination after the 4,000 hour exposure test, the laminated film was rated as "Δ"; and, when a laminated film had both excellent appearance and excellent adhesion even after the 4,000 hour exposure test, the laminated film was rated as "O".

[Preparation Example 1] (Production of a polyester thermoplastic elastomer)

To 100 Parts by mass of dimethyl isophthalate, 13 parts by mass of dimethyl sebacate, and 80 parts by mass of hexamethylene glycol were subjected to transesterification reaction in the presence of a dibutyltin diacetate catalyst, and then subjected to polycondensation under a reduced pressure, obtaining a non-crystalline polyester (soft segment) which has an intrinsic viscosity of 1.06, and which does not exhibit an endothermic peak ascribed to fusion of crystals, as measured by a DSC method. To 100 parts by mass of the polyester was added 32 parts by mass of polybutylene terephthalate pellets (hard segment) having an intrinsic viscosity of 0.98, and the resultant mixture was subjected to reaction at 240°C for 45 minutes, and then 0.03 parts by mass of phenylphosphonic acid was added to terminate the reaction, obtaining a polyester thermoplastic elastomer (X1). The obtained polymer had a melting temperature of 190°C and an intrinsic viscosity of 0.93.

[Preparation Example 2] (Synthesis of a silicon compound hydrolyzation condensation product C1)

In a reaction vessel, 100 Parts by weight of 2-propanol, 40 parts by weight of 0.1 mol/L hydrochloric acid, and 101 parts by weight of methyltrimethoxysilane were placed, and stirred at 30°C for one hour and 30 minutes, and, while continuing stirring, the temperature of the mixture was increased to 80 degrees and part of the solvent contained was distilled off, obtaining 124.5 parts by weight of a silicon compound hydrolyzation condensation product (C1) having a solids content of 30% by weight, in terms of $CH_3SiO_{3/2}$.

<Preparation of a coat agent for forming the layer D (HC-1)>

For hundreds and twenty Parts by mass of ARONIX M-350, manufactured by Toagosei Co., Ltd. (trimethylolpropane ethylene oxide-modified triacrylate) as a multifunctional (meth)acrylate, 1,820 parts by mass of 1,9-DA (1,9-nonanediol diacrylate), manufactured by Kyoeisha Chemical Co., Ltd., 31.5 parts by mass of 8UX-116A, manufactured by Taisei Fine Chemical Co., Ltd. (solids content: 63.5% by mass, MEK solution) as an urethane acrylate, 50 parts by mass of organic solvent dispersion-type surface modified colloidal silica (MEK-AC-2140Z, manufactured by Nissan Chemical Corporation; solids content: 40%) as inorganic fine particles (D3), 4 parts by mass of TINUVIN 405 (hydroxyphenyltriazine ultraviolet light absorber), manufactured by BASF AG, as (D4), 2 parts by mass of LA-52 (manufactured by ADEKA Corporation) as a hindered amine light stabilizer (D5), 1 part by mass of phenyl 1-hydroxyethyl ketone (IRGACURE 184, manufactured by BASF AG) as a photopolymerization initiator (D6), 2,050 parts by mass of methyl ethyl ketone (MEK), 10,050 parts by mass of methoxypropanol (MIBK), and 4,010 parts by mass of isopropanol (IPA) were mixed together to prepare a coat agent for forming the layer D (HC-1). The composition of (HC-1) is shown in Table 1 below.

<Preparation of a coat agent for forming the layer D (HC-2 to HC-10)>

Coat agents (HC-2) to (HC-10) were prepared in the same manner as in the preparation of (HC-1) except that the prepared coat agents had the respective compositions shown in Table 1.

In Table 1, M-315 indicates ARONIX M-315, manufactured by Toagosei Co., Ltd. (isocyanuric acid ethylene oxide-modified di- and triacrylate mixture), and MIBK-ST indicates (MIBK-ST, manufactured by Nissan Chemical Corporation; solids content: 30%).

[Example 1]

(Molding material A)

Polycarbonate resin pellets (Panlite L1250WP, manufactured by Teijin Limited) (homopolycarbonate resin of bisphenol A (PC-A; viscosity average molecular weight: 23,900)) and the thermoplastic elastomer (X1) obtained in [Preparation Example 1] above were individually pre-dried, and 92.93 parts by weight of the polycarbonate resin pellets, 7 parts by weight of the thermoplastic elastomer (X1) polymerized in Preparation Example 1, and 0.07 parts by weight of tetrakis-2,4-t-butylphenyl 4,4'-biphenylenediphosphonate (IRGAFOS PEP-Q, manufactured by BASF AG) as a heat stabilizer were mixed using a twin-cylinder mixer, and then extruded and pelletized using a twin-screw extruder at a cylinder temperature of 260°C, obtaining a molding material A for the layer A. The molding material A had a glass transition temperature of 145°C.

(Molding material B)

As a molding material B for the layer B, an acrylic resin (Acrypet VH-001, manufactured by Mitsubishi Rayon Co., Ltd.; thermoplastic acrylic resin obtained by copolymerizing 95 mol% of methyl methacrylate and 5 mol% of methyl acrylate) was prepared.

(Co-extrusion)

The molding material A and the molding material B were individually extruded from a T-die having a width of 650 mm by a feed block system using a single-screw extruder having a screw diameter of 40 mm under conditions such that the cylinder temperature was 260°C (molding material A) and 250°C (molding material B) and the screw rotational speed was 109 rpm (molding material A) and 11 rpm (molding material B), and the molten resin was pressed through a metal roll and a metal sleeve roll and cooled, and then subjected to edge trimming and wound up at a winding speed of 10.3 m/min, forming a laminated sheet having a two-layer structure of layer A/layer B (layer A: 240 μm; layer B: 60 μm) and having a width of 400 mm.

(Application)

Then, the coat agent for forming the layer D (HC-1) was applied to the layer B side of the laminated sheet using a bar coater (#8), and subjected to hot-air drying in a drying oven at 100°C for 5 minutes, obtaining a laminated film having a four-layer structure of layer A/layer B/layer C/layer D (layer A: 240 μm; layer B: 59 μm; layer C: 1.5 μm; layer D: 3.5 μm) (provided that the layer C and the layer D were in an uncured state).

The obtained laminated film was irradiated with an ultraviolet light at an irradiation intensity of 250 wW/cm$^2$ and at an irradiation dose of 2,000 mJ/cm$^2$ using a highpressure mercury lamp to cure the layer C and the layer D, obtaining a laminated film.

[Examples 2 to 17]

Laminated films were individually obtained in the same manner as in Example 1 except that the prepared coat agents had the respective compositions shown in Table 1 and were used as shown in Table 2, and that laminated films were formed under the conditions shown in Tables 2 and 3.

[Example 18]

On a female mold (bottom force) of a 15 cm square mold having a gently curved surface form with a curvature radius of 1 m, the laminated film obtained in Example 1 was first disposed so that the layer D was the bottom, namely, faced in the direction to be in contact with the mold. Then, evacuation was made through a vacuum port formed in the surface of

the female mold (bottom force) so that the laminated film was closely in contact with the mold. Then, the mold was closed and polycarbonate resin pellets (Panlite L1250WP, manufactured by Teijin Limited) were subjected to injection molding into the cavity of the mold under conditions such that the mold temperature was 90°C and the resin temperature was 290°C, obtaining a polycarbonate resin-molded article decorated with the laminated film. The obtained resin-molded article had such excellent appearance that a defect, such as a crack or wrinkle, was not seen in the appearance.

With respect to the obtained molded article, a weathering resistance was evaluated by the same method as that for Example 1, and, as a result, the weathering resistance was found to be excellent (O).

[Comparative Examples 1 to 3]

Laminated films were individually obtained in the same manner as in Example 1 except that the prepared coat agents had the respective compositions shown in Table 1 and were used as shown in Table 2, and that laminated films were formed under the conditions shown in Table 3.

[Comparative Example 4]

A polycarbonate resin-molded article was obtained in the same manner as in Example 18 except that the laminated sheet obtained in Comparative Example 1 was used. The obtained resin-molded article had such excellent appearance that a defect, such as a crack or wrinkle, was not seen in the appearance. A weathering resistance of the resin-molded article was evaluated, and, as a result, the weathering resistance was rated ×.

[Table 1]

| | | HC-1 | HC-2 | HC-3 | HC-4 | HC-5 | HC-6 | HC-7 | HC-8 | HC-9 | HC-10 |
|---|---|---|---|---|---|---|---|---|---|---|---|
| Multifunctional (meth)acrylate (Parts by mass) | M-350 | 40.0 | 40.0 | 20.0 | | 30.0 | 40.0 | 40.0 | 20.0 | 26.4 | 10.0 |
| | 1,9-DA | 20.0 | 20.0 | 20.0 | | 20.0 | 20.0 | | 10.0 | 26.4 | 10.0 |
| | M-315 | | | 20.0 | | 30.0 | | 20.0 | | 26.4 | |
| Urethane (meth)acrylate (Parts by mass) | BUX-116A | 31.5 | 31.5 | 31.5 | 100.0 | | 31.5 | 55.5 | 31.5 | 31.5 | 31.5 |
| Silicon compound hydrolyzation condensation product (Parts by mass) | C1 | | | | | | 50.0 | | | | |
| Inorganic fine particles (Parts by mass) | MEK-AC-2140Z | 50.0 | 50.0 | 50.0 | | 50.0 | | 12.0 | 125.0 | 2.0 | 150.0 |
| | MIBK-ST | | | | 122.0 | | | | | | |
| | TINUVIN 405 | 4.0 | | 4.0 | 4.0 | 4.0 | 4.0 | 4.0 | 4.0 | 4.0 | 4.0 |
| | LA-52 | 2.0 | | 2.0 | 2.0 | 2.0 | 2.0 | 2.0 | 2.0 | 2.0 | 2.0 |
| | Irgacure 184 | 5.0 | 5.0 | 5.0 | 5.0 | 5.0 | 5.0 | 5.0 | 5.0 | 5.0 | 5.0 |
| Solvent (Parts by mass) | MEK | 51.0 | 55.5 | 31.5 | 28.0 | 61.5 | 51.5 | 60.5 | 16.5 | 88.0 | 1.5 |
| | MIBK | 51.0 | 48.0 | 51.0 | | 51.0 | 61.0 | 44.0 | 51.0 | 51.0 | 51.0 |
| | IPA | 10.0 | | 30.0 | | | | | | | |

[Table 2]

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Layer A | Composition (Parts by mass) | P1 | 92.93 | 92.93 | 90.93 | 92.93 | 92.93 | 97.93 | 99.93 | 92.93 | 92.93 | 92.93 |
| | | X1 | 7.00 | 7.00 | 9.00 | 7.00 | 7.00 | 2.00 | | 7.00 | 7.00 | 7.00 |
| | | T1 | 0.07 | 0.07 | 0.07 | 0.07 | 0.07 | 0.07 | 0.07 | 0.07 | 0.07 | 0.07 |
| | Thickness (μm) | | 240 | 180 | 440 | 270 | 180 | 240 | 240 | 240 | 60 | 240 |
| Layer B | Composition (Parts by mass) | P2 | 99.00 | 99.00 | 99.50 | 99.00 | 99.50 | 99.00 | 99.00 | 99.00 | 99.00 | 99.00 |
| | | UV1 | 1.00 | 1.00 | 0.50 | 1.00 | 0.50 | 1.00 | 1.00 | 1.00 | 1.00 | 1.00 |
| | Thickness (μm) | | 59 | 59 | 57 | 29 | 179 | 60 | 59 | 60 | 59 | 59 |
| Layer C | Composition (Parts by mass) | P2 | 66 | 66 | 63 | 66 | 67 | 71 | 66 | 70 | 63 | 66 |
| | | M-350 | 17 | 18 | 9 | 17 | 18 | 15 | 18 | | 13 | 17 |
| | | 1,9-DA | 8 | 9 | 9 | 8 | 9 | 7 | 9 | | 8 | 8 |
| | | M-315 | | | 9 | | | | | | 13 | |
| | | BUX-116A | 6 | 6 | 7 | 6 | 6 | 5 | 6 | 30 | | 6 |
| | | UV1 | 1 | 1 | 1 | 1 | | 1 | 1 | 1 | 1 | 1 |
| | | UV2 | 1 | | 1 | 1 | | 1 | | 1 | 1 | 1 |
| | | HA1 | 1 | | 1 | 1 | | | | 1 | 1 | 1 |
| | Thickness (μm) | | 1.5 | 1.5 | 4.8 | 1.5 | 1.5 | 0.5 | 1.5 | 1.5 | 1.5 | 1.5 |

(continued)

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Layer D | Composition (Parts by mass) | M-350 | 37 | 38 | 17 | 37 | 38 | 38 | 38 | | 28 | 37 |
| | | 1,9-DA | 18 | 19 | 17 | 18 | 19 | 19 | 19 | | 18 | 18 |
| | | M-315 | | | 17 | | | | | | 28 | |
| | | BUX-116A | 19 | 20 | 19 | 19 | 20 | 19 | 20 | 60 | | 19 |
| | | C1 | | | | | | | | | | 21 |
| | | MEK-AC-2140Z | 21 | 23 | 25 | 21 | 23 | 19 | 23 | | 21 | |
| | | MIBK-ST | | | | | | | | 35 | | |
| | | UV2 | 3 | | 3 | 3 | | 3 | | 3 | 3 | 3 |
| | | HA1 | 2 | | 2 | 2 | | 2 | | 2 | 2 | 2 |
| | Thickness (μm) | | 3.5 | 3.5 | 2.2 | 3.5 | 3.5 | 4.0 | 3.5 | 2.0 | 3.5 | 3.5 |
| Coat agent | | | HC-1 | HC-2 | HC-3 | HC-1 | HC-2 | HC-1 | HC-2 | HC-4 | HC-5 | HC-6 |
| Heat drying conditions | | Temperature (°C) | 100 | 100 | 100 | 100 | 100 | 100 | 100 | 100 | 100 | 100 |
| | | Time (min.) | 5 | 5 | 15 | 5 | 5 | 3 | 5 | 10 | 5 | 5 |
| Ultraviolet light irradiation conditions | | Accumulated irradiation dose ($mJ/cm^2$) | 2000 | 2000 | 2000 | 2000 | 2000 | 2000 | 2000 | 2000 | 2000 | 2000 |
| Thickness of layer | | Layer C + Layer D (μm) | 5.0 | 5.0 | 7.0 | 5.0 | 5.0 | 4.5 | 5.0 | 3.5 | 5.0 | 5.0 |
| | | Ratio of thickness of Layer C (%) | 30 | 30 | 69 | 30 | 30 | 11 | 30 | 43 | 30 | 30 |
| Reaction ratio of double bond of acrylate monomer in layer C | | (%) | 48 | 52 | 55 | 48 | 54 | 46 | 52 | 45 | 50 | 48 |
| Composition ratio of Layer C | Y/(X + Y) | (%) | 32 | 34 | 35 | 32 | 33 | 28 | 34 | 30 | 35 | 32 |

(continued)

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Evaluation | Total light transmittance (TT) | (%) | 90.4 | 90.5 | 90.5 | 90.5 | 90.5 | 90.5 | 90.4 | 90.4 | 90.5 | 90.4 |
| | Initial haze (H) | (%) | 0.6 | 0.6 | 2.8 | 0.5 | 0.7 | 0.5 | 0.6 | 1.4 | 0.5 | 0.6 |
| | Boiling water resistance (Adhesion) | | O | O | O | O | O | O | O | O | O | O |
| | Flexing properties | | O | O | Δ | O | Δ | O | Δ | O | Δ | O |
| | Impact resistance | | O | O | O | O | O | O | O | O | O | O |
| | Wear resistance (ΔH) | (%) | 3.6 | 2.4 | 2.6 | 3.6 | 3.6 | 3.2 | 3.6 | 8.4 | 2.8 | 4.8 |
| | Weathering resistance (Xenon) | | O | O | O | O | O | O | O | O | O | O |

[Table 3]

| | | | Example | | | | | | | Comparative Example | | |
|---|---|---|---|---|---|---|---|---|---|---|---|---|
| | | | 11 | 12 | 13 | 14 | 15 | 16 | 17 | 1 | 2 | 3 |
| Layer A | Composition (Parts by mass) | P1 | 92.93 | 92.93 | 92.93 | 92.93 | 92.93 | 92.93 | 92.93 | 92.93 | 92.93 | 92.93 |
| | | X1 | 7.00 | 7.00 | 7.00 | 7.00 | 7.00 | 7.00 | 7.00 | 7.00 | 7.00 | 7.00 |
| | | T1 | 0.07 | 0.07 | 0.07 | 0.07 | 0.07 | 0.07 | 0.07 | 0.07 | 0.07 | 0.07 |
| | Thickness (μm) | | 240 | 240 | 240 | 30 | 180 | 240 | 240 | 240 | 240 | 240 |
| Layer B | Composition (Parts by mass) | P2 | 99.00 | 99.00 | 99.00 | 99.00 | 99.50 | 99.00 | 99.00 | 99.00 | 99.00 | 99.00 |
| | | UV1 | 1.00 | 1.00 | 1.00 | 1.00 | 0.50 | 1.00 | 1.00 | 1.00 | 1.00 | 1.00 |
| | Thickness (μm) | | 59 | 59 | 56 | 59 | 239 | 59 | 59 | 59 | 59 | 59 |
| Layer C | Composition (Parts by mass) | P2 | 66 | 66 | 66 | 66 | 66 | 66 | 66 | | 66 | 66 |
| | | M-350 | 17 | 17 | 17 | 17 | 17 | 17 | 17 | | 9 | 17 |
| | | 1,9-DA | 8 | 8 | 8 | 8 | 8 | 8 | 8 | | 8 | 8 |
| | | M-315 | | | | | | | | | 8 | |
| | | BUX-116A | 6 | 6 | 6 | 6 | 6 | 6 | 6 | | 6 | 6 |
| | | UV1 | 1 | 1 | 1 | 1 | 1 | 1 | 1 | | 1 | 1 |
| | | UV2 | 1 | 1 | 1 | 1 | 1 | 1 | 1 | | 1 | 1 |
| | | HA1 | 1 | 1 | 1 | 1 | 1 | 1 | 1 | | 1 | 1 |
| | Thickness (μm) | | 1.5 | 1.0 | 6.5 | 1.5 | 1.5 | 1.5 | 1.5 | 0.0 | 1.5 | 0.5 |

(continued)

| | | | Example | | | | | | | Comparative Example | | |
|---|---|---|---|---|---|---|---|---|---|---|---|---|
| | | | 11 | 12 | 13 | 14 | 15 | 16 | 17 | 1 | 2 | 3 |
| Layer D | Composition (Parts by mass) | M-350 | 37 | 18 | 28 | 37 | 37 | 34 | 39 | 38 | 25 | 8 |
| | | 1,9-DA | 18 | 9 | 14 | 18 | 18 | 17 | 19 | 19 | 25 | 8 |
| | | M-315 | | | | | | | | | 24 | |
| | | BUX-116A | 35 | 19 | 19 | 19 | 19 | 19 | 19 | 19 | 20 | 17 |
| | | C1 | | | | | | | | | | |
| | | MEK-AC-2140Z | 5 | 49 | 34 | 21 | 21 | 25 | 19 | 19 | 1 | 62 |
| | | MIBK-ST | | | | | | | | | | |
| | | UV2 | 3 | 3 | 3 | 3 | 3 | 3 | 3 | 3 | 3 | 3 |
| | | HA1 | 2 | 2 | 2 | 2 | 2 | 2 | 2 | 2 | 2 | 2 |
| | Thickness (μm) | | 16.0 | 4.0 | 1.5 | 3.5 | 3.5 | 1.0 | 20.0 | 5.0 | 3.5 | 4.0 |
| Coat agent | | | HC-7 | HC-8 | HC-1 | HC-1 | HC-1 | HC-1 | HC-1 | HC-1 | HC-9 | HC-10 |
| Heat drying conditions | | Temperature (°C) | 100 | 100 | 100 | 100 | 100 | 100 | 100 | 100 | 100 | 100 |
| | | Time (min.) | 5 | 5 | 20 | 5 | 5 | 5 | 5 | 1 | 5 | 5 |
| Ultraviolet light irradiation conditions | | Accumulated irradiation dose ($mJ/cm^2$) | 2000 | 2000 | 2000 | 2000 | 2000 | 2000 | 2000 | 2000 | 2000 | 2000 |
| Thickness of layer | | Layer C + Layer D (μm) | 17.5 | 5.0 | 8.0 | 5.0 | 5.0 | 2.5 | 21.5 | 5.0 | 5.0 | 4.5 |
| | | Ratio of thickness of Layer C (%) | 9 | 20 | 81 | 30 | 30 | 60 | 7 | 0 | 30 | 11 |
| Reaction ratio of double bond of acrylate monomer in layer C | | (%) | 48 | 46 | 46 | 48 | 48 | 48 | 48 | - | 50 | 45 |
| Composition ratio of Layer C | Y/(X + Y) | (%) | 32 | 32 | 32 | 32 | 32 | 32 | 32 | - | 32 | 32 |

(continued)

| | | | Example | | | | | | | Comparative Example | | |
|---|---|---|---|---|---|---|---|---|---|---|---|---|
| | | | 11 | 12 | 13 | 14 | 15 | 16 | 17 | 1 | 2 | 3 |
| Evaluation | Total light transmittance (TT) | (%) | 90.4 | 9.4 | 88.8 | 90.2 | 90.4 | 89.9 | 89.9 | 90.4 | 90.3 | 88.2 |
| | Initial haze (H) | (%) | 0.9 | 2.1 | 4.6 | 0.6 | 0.8 | 2.5 | 0.6 | 0.5 | 0.5 | 6.5 |
| | Boiling water resistance (Adhesion) | | O | O | O | O | O | O | Δ | × | O | O |
| | Flexing properties | | Δ | Δ | Δ | Δ | Δ | Δ | Δ | Δ | O | × |
| | Impact resistance | | O | O | O | Δ | Δ | O | O | O | O | O |
| | Wear resistance (ΔH) | (%) | 4.2 | 3.4 | 6.4 | 3.6 | 3.6 | 9.6 | 3.6 | 3.5 | 14.6 | 2.8 |
| | Weathering resistance (Xenon) | | O | O | O | O | O | O | O | Δ | O | Δ |

P1: Panlite L1250WP, manufactured by Teijin Limited
X1: Polyester thermoplastic elastomer obtained in Preparation Example 1
T1: Tetrakis-2,4-t-butylphenyl 4,4'-biphenylenediphosphonate
P2: Acrypet VH-001, manufactured by Mitsubishi Rayon Co., Ltd.
UV1: TINUVIN 360 (benzotriazole ultraviolet light absorber), manufactured by BASF AG
C1: Silicon compound hydrolyzation condensation product synthesized in Preparation Example 2
UV2: TINUVIN 405 (hydroxyphenyltriazine ultraviolet light absorber), manufactured by BASF AG
HA1: LA-52 (hindered amine light stabilizer), manufactured by ADEKA Corporation

Industrial Applicability

The laminated film of the present invention not only has excellent adhesion, impact resistance, flexing properties, and wear resistance but also has a weathering resistance, and therefore is useful, for example, as a thermoforming film for in-mold lamination molding or a decorative film. Accordingly, a resin-molded article using the laminated film can be used in, for example, an interior automotive trim material, an electrical appliance, a cosmetic film, an interior for building material, and an exterior for building material, and the resin-molded article has especially excellent weathering resistance and therefore is advantageously used as an exterior automotive trim material or exterior for building construction.

## Claims

1. A laminated film having a layer containing a polycarbonate resin (layer A), a layer containing a thermoplastic acrylic resin (layer B), an acrylic resin mixture intermediate layer (layer C), and a layer containing a cured product of an active energy ray-curable acrylate (layer D), in which the layers are laminated in this order, and satisfying the following properties (a) to (d):

   (a) the active energy ray-curable acrylate contains at least one of a multifunctional (meth)acrylate and an urethane (meth)acrylate;
   (b) the layer D contains at least one of inorganic fine particles and a silicon compound hydrolyzation condensation product;
   (c) based on the total mass of the multifunctional (meth)acrylate, the urethane (meth)acrylate, the inorganic fine particles, and the silicon compound hydrolyzation condensation product, the total content of the multifunctional (meth)acrylate and the urethane acrylate is 45 to 97% by mass, and the total content of the inorganic fine particles and the silicon compound hydrolyzation condensation product is 3 to 55% by mass; and
   (d) the layer C contains the thermoplastic acrylic resin and a cured product of at least one of the multifunctional (meth)acrylate and the urethane (meth)acrylate.

2. The laminated film according to claim 1, wherein Y/ (X + Y) is 0.2 to 0.9, when the amount of the thermoplastic acrylic resin in the layer C is X (parts by mass), and the total amount of the multifunctional (meth)acrylate and the urethane (meth) acrylate in the layer C is Y (parts by mass) .

3. The laminated film according to claim 1 or 2, wherein the reaction ratio of the double bond of the (meth)acrylic group of the multifunctional (meth)acrylate and the urethane (meth)acrylate in the layer C is 25 to 70%.

4. The laminated film according to claim 1 or 2, wherein the ratio of the thickness of the layer C to the total of the thickness of the layer C and the thickness of the layer D is 10 to 70%.

5. The laminated film according to claim 1 or 2, wherein the layer C has a thickness of 0.3 to 5.0 μm.

6. The laminated film according to claim 1 or 2, wherein the layer D has a thickness of 1.5 to 18 μm.

7. The laminated film according to claim 1 or 2, wherein the total of the thickness of the layer C and the thickness of the layer D is 3 to 20 μm.

8. The laminated film according to claim 1 or 2, wherein the layer A contains a polyester thermoplastic elastomer, wherein the polyester thermoplastic elastomer is composed of a hard segment containing a polybutylene terephthalate unit,

and a soft segment containing a polyester unit which has an aromatic dicarboxylic acid and an aliphatic dicarboxylic acid as a dicarboxylic acid component, and a diol having 5 to 15 carbon atoms as a diol component.

**9.** The laminated film according to claim 8, wherein the polyester thermoplastic elastomer is contained in an amount of 1 to 20 parts by weight, relative to 100 parts by weight of the polycarbonate resin.

**10.** A method for producing the laminated film according to claim 1, comprising laminating a layer containing a polycarbonate resin (layer A) and a layer containing a thermoplastic acrylic resin (layer B) by co-extrusion, and then applying onto the layer B a coating composition containing an organic solvent, an active energy ray-curable acrylate, and at least one of inorganic fine particles and a silicon compound hydrolyzation condensation product, and drying the applied coating composition, and then irradiating the resultant composition with an active energy ray to form an acrylic resin mixture intermediate layer (layer C) and an acrylate cured layer (layer D).

**11.** The method for producing the laminated film according to claim 10, wherein the layer C contains the thermoplastic acrylic resin and a cured product of at least one of the multifunctional (meth)acrylate and the urethane (meth)acrylate.

**12.** A resin-molded article having a thermoplastic resin layer in contact with the layer A of the laminated film according to claim 1.

**13.** A resin-molded article having a thermoplastic resin injection-molded on the surface on the layer A side of the laminated film according to claim 1.

## INTERNATIONAL SEARCH REPORT

International application No.
**PCT/JP2024/009971**

### A. CLASSIFICATION OF SUBJECT MATTER

***B32B 27/36***(2006.01)i; ***B05D 3/06***(2006.01)i; ***B05D 7/04***(2006.01)i; ***B05D 7/24***(2006.01)i; ***B29C 45/14***(2006.01)i; ***B32B 27/30***(2006.01)i
FI: B32B27/36 102; B05D3/06 Z; B05D7/04; B05D7/24 302P; B05D7/24 302Y; B05D7/24 302Z; B05D7/24 303B; B29C45/14; B32B27/30 A

According to International Patent Classification (IPC) or to both national classification and IPC

### B. FIELDS SEARCHED

Minimum documentation searched (classification system followed by classification symbols)

B32B1/00-43/00; B05D1/00-7/26; B29C45/00-45/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-215843 A (MITSUBISHI CHEMICAL CORPORATION) 30 September 2010 (2010-09-30) claims 1-3, 7-9, paragraphs [0001]-[0002], [0007], [0013], [0018]-[0022], [0027]-[0028], [0030], [0046], [0050]-[0063], [0066]-[0068], [0073]-[0092] | 1-7 |
| Y | | 8-9 |
| A | | 10-13 |
| X | JP 2018-176536 A (NOF CORPORATON) 15 November 2018 (2018-11-15) claims 1-3, 5-7, paragraphs [0001], [0012]-[0015], [0020]-[0021], [0025], [0034], [0037]-[0038], [0042]-[0045], [0047]-[0050], [0085], [0091]-[0100], [0111], [0114]-[0120] | 1-7, 10-13 |
| Y | | 8-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/009971**

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2021-146687 A (TEIJIN LIMITED) 27 September 2021 (2021-09-27)<br>claims 1-3, 10-11, paragraphs [0023], [0029]-[0031], [0039], [0042], [0046], [0051], [0053]-[0054], [0057]-[0059], [0063]-[0066] | 8-9<br>1-7, 10-13 |
| A | JP 2014-40017 A (MITSUBISHI RAYON CO., LTD.) 06 March 2014 (2014-03-06)<br>entire text, all drawings | 1-13 |
| A | JP 2014-162096 A (TEIJIN LIMITED) 08 September 2014 (2014-09-08)<br>entire text, all drawings | 1-13 |

Form PCT/ISA/210 (second sheet) (July 2022)

**INTERNATIONAL SEARCH REPORT**
**Information on patent family members**

International application No.
**PCT/JP2024/009971**

| Patent document cited in search report | | | Publication date (day/month/year) | Patent family member(s) | Publication date (day/month/year) |
|---|---|---|---|---|---|
| JP | 2010-215843 | A | 30 September 2010 | (Family: none) | |
| JP | 2018-176536 | A | 15 November 2018 | (Family: none) | |
| JP | 2021-146687 | A | 27 September 2021 | (Family: none) | |
| JP | 2014-40017 | A | 06 March 2014 | (Family: none) | |
| JP | 2014-162096 | A | 08 September 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010247493 A
- JP 2009234184 A